# EUROPEAN PATENT SPECIFICATION

(11) **EP 3 821 673 B1**
(45) Date of publication and mention of the grant of the patent: **03.09.2025**
(21) Application number: 19833607.5
(22) Date of filing: 08.07.2019
(51) Int. Cl.: H04W 76/12, H04W 76/16, H04W 76/22, H04W 88/16

(54) **METHODS AND APPARATUS FOR DATA TRANSMISSION**
VERFAHREN UND VORRICHTUNG ZUR DATENÜBERTRAGUNG
PROCÉDÉS ET APPAREIL DE TRANSMISSION DE DONNÉES

(30) Priority: 09.07.2018 WO PCT/CN2018/094978
(43) Date of publication of application: 19.05.2021
(73) Proprietor: Telefonaktiebolaget LM Ericsson (publ), 164 83 Stockholm (SE)
(72) Inventor: GAN, Juying, Shanghai 200335 (CN); HE, Yingjiao, Shanghai 200335 (CN); ZHU, Jinyin, Shanghai 200335 (CN)
(74) Representative: Ericsson
(86) International application number: PCT/CN2019/095133
(87) International publication number: WO 2020/011134

(56) References cited:
- EP-A1- 3 113 539
- WO-A1-2017/110650
- WO-A1-2018/062949
- US-A1- 2013 010 756
- US-A1- 2017 126 618
- VODAFONE: "New solution: Addition of SGW-U as uplink classifier instead of relocating S/PGW-U", vol. SA WG2, no. Newport Beach, CA, USA; 20180528 - 20180601, 2 June 2018 (2018-06-02), XP051536477, Retrieved from the Internet <URL:http://www.3gpp.org/ftp/tsg%5Fsa/WG2%5FArch/TSGS2%5F127BIS%5FNewport%5FBeach/Docs/S2%2D186152%2Ezip> [retrieved on 20180602]
- ERICSSON: "PCRF-triggered user plane mobility clarifications on solution#3", vol. SA WG2, no. Sanya, China; 20180416 - 20180420, 20 April 2018 (2018-04-20), XP051432985, Retrieved from the Internet <URL:http://www.3gpp.org/ftp/Meetings%5F3GPP%5FSYNC/SA2/Docs/> [retrieved on 20180420]
- JOSE COSTA-REQUENA ET AL: "SDN-Based UPF for Mobile Backhaul Network Slicing", 2018 EUROPEAN CONFERENCE ON NETWORKS AND COMMUNICATIONS (EUCNC), June 2018 (2018-06-01), pages 48 - 53, XP055742659, ISBN: 978-1-5386-1478-5, DOI: 10.1109/EuCNC.2018.8442795
- "Study on enhancement of EPC for low latency communication including device mobility", 3GPP TR 23.739 V1.0.0 (2018-06), 7 June 2018 (2018-06-07), XP051451626

## Description

### TECHNICAL FIELD

The non-limiting and exemplary embodiments of the present disclosure generally relate to the technical field of communications, and specifically to methods and an apparatus for data transmission.

### BACKGROUND

This section introduces aspects that may facilitate a better understanding of the disclosure. Accordingly, the statements of this section are to be read in this light and are not to be understood as admissions about what is in the prior art or what is not in the prior art.

CUPS (Control and User Plane Separation) of EPC (Evolved Packet Core) nodes provides architecture enhancements for the separation of functionality in the EPC. This enables flexible network deployment and operation, by distributed or centralized deployment and the independent scaling between control plane and user plane functions - while not affecting the functionality of the existing nodes subject to this split.

Documents of the prior art to be mentioned are document "Study on enhancement of EPC for low latency communication including device mobility", 3GPP TR 23.739 V1.0.0 (2018-06), 7 June 2018, and document VODAFONE: "New solution: Addition of SGW-U as uplink classifier instead of relocating S/PGW-U", 3GPP DRAFT; S2-186152 REV 5859 R 5410 R 4577 UPF AS ULCL, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, no. Newport Beach, CA, USA; 20180528 - 20180601 2 June 2018 (2018-06-02), Retrieved from the Internet: URL:http://www.3gpp.org/ftp/tsg%5Fsa/WG2%5FArch/TSGS2%5F127BIS%5FNewport%5FBeach/ Docs/S2%2D186152%2Ezip.

### SUMMARY

Various embodiments of the present disclosure mainly aim at providing methods and an apparatus as defined by the independent claims. Other features and advantages of embodiments of the present disclosure will also be understood from the following description of specific embodiments when read in conjunction with the accompanying drawings, which illustrate, by way of example, the principles of embodiments of the present disclosure.

In a first aspect of the disclosure, there is provided a method implemented at a control plane of a packet data network (PDN) gateway (PGW), PGW-C, as according to independent claim 1.

In a second aspect of the disclosure, there is provided a method implemented by a system comprising an additional packet data network, PDN, gateway, PGW, user plane function, PGW-U, an initial PGW-U, a serving gateway, SGW, control plane function, SGW-C, and an SGW user plane function, SGW-U, as according to independent claim 3.

In a third aspect of the disclosure, there is provided an apparatus for a control plane of a packet data network (PDN) gateway (PGW), PGW-C, in a wireless network as according to independent claim 4.

The embodiments of present disclosure provide support for a specified service, namely low latency communication service, without deleting an old PDN connection and establishing a new PDN connection.

### BRIEF DESCRIPTION OF THE DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG. 1 schematically shows a system;
FIG. 2 schematically shows a system;
FIG. 3 shows a flowchart of a method;
FIG. 4 shows a flowchart of a method;
FIG. 5 shows a flowchart of a method;
FIG. 6 shows a flowchart of a method;
FIG. 7 shows a flowchart of a method;
FIG. 8 shows a flowchart of a method;
FIGs. 9a-9e illustrate simplified block diagrams of an apparatus in PGW-C, additional PGW-U, SGW-C, SGW-U and initial PGW-U respectively;
FIG. 10 illustrates a simplified block diagram of an apparatus for a PGW-C;
FIG. 11 illustrates a simplified block diagram of an apparatus for an additional PGW-U;
FIG. 12 illustrates a simplified block diagram of an apparatus for a SGW-C;
FIG. 13 illustrates a simplified block diagram of an apparatus for a SGW-U; and
FIG. 14 illustrates a simplified block diagram of an apparatus for an initial PGW-U.

### DETAILED DESCRIPTION

For the purpose of explanation, details are set forth in the following description in order to provide a thorough understanding of the embodiments disclosed.

The term "network function" refers to any suitable function which can be implemented in a network device of a wireless communication network via which a terminal device can access the network and receives services therefrom. In the wireless communication network, the network device may refer to Mobility Management Entity (MME), Serving GateWay (SGW), Packet Data Network GateWay (PGW), Policy and Charging Rules Function (PCRF), Home Subscriber Server (HSS) or any other suitable device in the wireless communication network. It is noted that the network function may comprise different network elements depending on the type of network.

The term "terminal device" refers to any end device that can access a wireless communication network and receive services therefrom. By way of example and not limitation, the terminal device refers to a mobile terminal, user equipment (UE), or other suitable devices. The UE may be, for example, a Subscriber Station (SS), a Portable Subscriber Station, a Mobile Station (MS), or an Access Terminal (AT). The terminal device may include, but not limited to, portable computers, image capture terminal devices such as digital cameras, gaming terminal devices, music storage and playback appliances, a mobile phone, a cellular phone, a smart phone, voice over IP (VoIP) phones, wireless local loop phones, a tablet, a wearable device, a personal digital assistant (PDA), portable computers, desktop computer, image capture terminal devices such as digital cameras, gaming terminal devices, music storage and playback appliances, wearable terminal devices, vehicle-mounted wireless terminal devices, wireless endpoints, mobile stations, laptop-embedded equipment (LEE), laptop-mounted equipment (LME), USB dongles, smart devices, wireless customer-premises equipment (CPE) and the like. In the following description, the terms "terminal device", "terminal", "user equipment" and "UE" may be used interchangeably. As one example, a terminal device may represent a UE configured for communication in accordance with one or more communication standards promulgated by the 3GPP (3rd Generation Partnership Project), such as 3GPP's GSM, UMTS, LTE standards. As used herein, a "user equipment" or "UE" may not necessarily have a "user" in the sense of a human user who owns and/or operates the relevant device. In some embodiments, a terminal device may be configured to transmit and/or receive information without direct human interaction. For instance, a terminal device may be designed to transmit information to a network on a predetermined schedule, when triggered by an internal or external event, or in response to requests from the wireless communication network. Instead, a UE may represent a device that is intended for sale to, or operation by, a human user but that may not initially be associated with a specific human user.

As yet another example, in an Internet of Things (IOT) scenario, a terminal device may represent a machine or other device that performs monitoring and/or measurements, and transmits the results of such monitoring and/or measurements to another terminal device and/or network equipment. The terminal device may in this case be a machine-to-machine (M2M) device, which may in a 3GPP context be referred to as a machine-type communication (MTC) device. As one particular example, the terminal device may be a UE implementing the 3GPP narrow band internet of things (NB-IoT) standard. Particular examples of such machines or devices are sensors, metering devices such as power meters, industrial machinery, or home or personal appliances, for example refrigerators, televisions, personal wearables such as watches etc. In other scenarios, a terminal device may represent a vehicle or other equipment that is capable of monitoring and/or reporting on its operational status or other functions associated with its operation.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

The terminology used herein is for the purpose of describing particular embodiments only and is not intended to be liming of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

For illustrative purposes, several embodiments of the present disclosure will be described in the context of a wireless core network and a low latency communication (LLC) service.

There is also ongoing study in 3GPP, i.e., in 3GPP TR23.739, for "enhancement of EPC for low latency communication including device mobility". A purpose of this study is how to select a new and local user plane with low latency which can meet LLC requirement when the service requiring low latency is detected and/or UE moves to a new location. Some solutions have been identified in TR 23.739.

A solution in TR 23.739 is to select a local user plane by establishing a new packet data network (PDN) connection for the LLC. The problems of this solution may comprise much extra signaling in the network for the PDN connection establishment and deletion, service not being able to be served with low latency before the PDN establishment procedure is completed and UE being impacted.

Another solution in TR 23.739 is to keep the existing control plane of a serving gateway (SGW-C) and control plane of PDN gateway (PGW-C) (as combined one) and an initial user plane of the PGW (PGW-U) and select a new user plane node with both a user plane of the SGW (SGW-U) and PGW-U function. The new user plane supports UL CL (UpLink Classifier) function so that the service data flows for the LLC (Low Latency Communication) application can break out locally to data network. The problems of this solution may comprise the assumptions of combining SGW-C with PGW-C and combining SGW-U with additional PGW-U are not always applicable and changing the SGW-U to be collocated with the additional PGW-U will cause extra signaling in network and add the delay of local network serving the LLC service.

To overcome or mitigate at least one of above mentioned problems or other problems, the embodiments of the present disclosure propose a solution to support addition of additional PGW-U. The addition of additional PGW-U may be triggered based on various conditions for example when a low latency communication service is detected and/or UE mobility is detected which requires to setup a new local user plane close to a local data network. With introduction of the additional PGW-U, there is the uplink classification (UL CL) functionality in the network so that uplink packets for a specified service such as LLC are sent to the additional PGW-U and the other services are sent to initial PGW-U. There may be two options regarding where the UL CL is located: one is SGW-U supporting the UL CL functionality (not encompassed by the wording of the claims) and the other one is the additional PGW-U supporting the UL CL functionality (as according to the claimed invention).

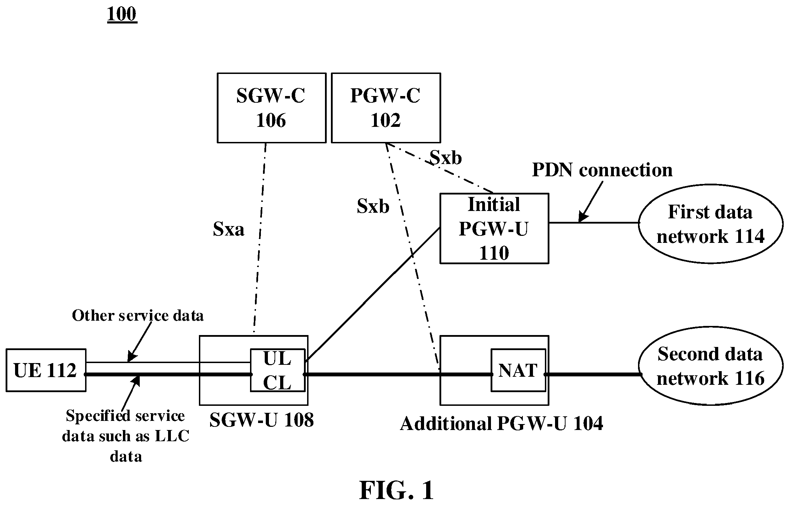

FIG. 1 schematically shows a system not encompassed by the wording of the claims, but useful for understanding the claimed invention. As shown in FIG. 1, the system 100 may comprise a PGW control plane (PGW-C) 102, a PGW additional user plane (PGW-U) 104, a SGW control plane (SGW-C) 106, a SGW user plane (SGW-U) 108, an initial PGW-U 110, UE 112, a first data network 114 and a second data network 116. A PDN connection may be used by UE 112 to connect to the first data network 114 through at least SGW-U 108 and an initial user plane of PGW (i.e., PGW-U 110), and an additional user plane of the PGW (i.e., PGW-U 104) may be used for connecting UE 112 with the second data network 116. The system 100 may be CUPS (Control and User Plane Separation) architecture as defined in 3GPP TS23.214. With CUPS, Sxb interface is defined between PGW-C and PGW-U and Sxa interface is defined between SGW-C and SGW-U. CUPS provides the architecture enhancements for the separation of functionality in the Evolved Packet Core functionality such as SGW, PGW, TDF (Traffic Detection Function), etc. This enables flexible network deployment and operation, by distributed or centralized deployment and the independent scaling between control plane and user plane functions while not affecting the functionality of the existing nodes subject to this split.

In system 100, SGW-U 108 implements an uplink classifier (UL CL) function to enable a specified part of uplink data in the PDN connection to be forwarded to the second data network 116 through PGW-U 104.

During PDN connection setup or mobility, if SGW-C 106 knows, e.g., by local configuration or informed by other node, that a specified service such as low latency communication service is applicable for this PDN, SGW-C 106 may try to select SGW-U 108 which supports UL CL.

When a local PGW-U (referred to as additional PGW-U) needs to be selected, the PDN connection and the initial PGW-U 110 may be kept while PGW-C 102 may select an additional PGW-U 104 to serve the specified service data such as low latency communication service data in the PDN connection and this additional PGW-U 104 may be added to the current PDN connection.

The current UE IP address may be kept unchanged. If the additional PGW-U 104 and the initial PGW-U 110 are in a different IP domain and if the UE IP address is also supported by the additional PGW-U 104, the UE IP address may be directly used by the additional PGW-U 104 for data matching and routing. Otherwise PGW-C 102 may allocate a new IP address as additional UE IP address and this information may be provided to the additional PGW-U 104.

The additional PGW-U 104 does a network address translation (NAT) between an initial UE IP address and the additional UE IP address.

PGW-C 102 provides the additional PGW-U information, e.g., an IP address and the new S5/S8-U PGW F-TEID (Fully Qualified tunnel endpoint identifier), to SGW-C 106 together with instruction information, such as service data flow filter (SDF) and/or application identity (ID) information, indicating which IP flow should be delivered to the additional PGW-U 104. In case of combined SGW-C 106 and PGW-C 102, this step may be omitted.

SGW-C 106 forwards the additional PGW-U information together with the instruction information such as SDF Filter or Application ID information to SGW-U 108.

SGW-U 108 classifies the uplink data for example using the SDF Filter or Application ID information and forwards the packet matching the SDF Filter or Application ID to the additional PGW-U 104 while for other data flows to the initial PGW-U 110.

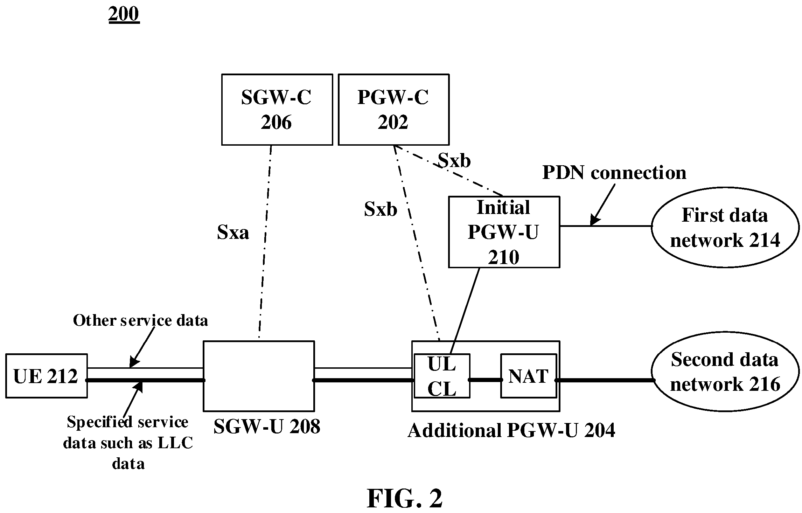

FIG. 2 schematically shows a system for an embodiment of the present disclosure. As shown in FIG. 2, the system 200 comprises PGW-C 202, additional PGW-U 204, SGW-C 206, SGW-U 208, initial PGW-U 210, UE 212, a first data network 214 and a second data network 216. A PDN connection 218 is used by UE 212 to connect to the first data network 214 through at least SGW-U 208 and initial PGW-U 210. An additional PGW-U 204 is used for connecting UE 212 with the second data network 216. The system 200 may be CUPS (Control and User Plane Separation) architecture as defined in 3GPP TS23.214. For some parts which have been described above, detailed description thereof is omitted here for brevity

In system 200, the additional PGW-U 204 implements the UL CL function to enable the specified part of uplink data in the PDN connection to be forwarded to the second data network 116 through the additional PGW-U 204.

When an additional PGW-U needs to be selected, the PDN connection and the initial PGW-U 210 may be kept while PGW-C 202 selects the additional PGW-U 204 which supports UL CL. PGW-C 202 sends, to the additional PGW-U 204, address information of the initial PGW-U and instruction information indicating the specified part of uplink data in the PDN connection is forwarded to the second data network 216 and the other part of uplink data in the PDN connection is forwarded to the initial PGW-U 210.

PGW-C 202 sends, to the PGW-U 210, address information of additional PGW-U 204 and instruction information indicating that the PGW-U 210 switches communication from the SGW-U 208 to the additional PGW-U 204.

The current UE IP address may be kept unchanged as described above. According to the invention PGW-C 202 allocates a new IP address as additional UE IP address and this information is provided to the additional PGW-U 204. The additional PGW-U 204 performs NAT between the initial UE IP address and the additional UE IP address.

PGW-C 202 provides the additional PGW-U information, which is an IP address and the new S5/S8-U PGW F-TEID (Fully Qualified tunnel endpoint identifier), to SGW-C 206 together with instruction information indicating that all the uplink data in the PDN connection is forwarded to the additional PGW-U 204.

SGW-C 206 sends address information of PGW-U 204 and instruction information to SGW-U 208 which sends all the uplink data in the PDN connection to the additional PGW-U 204 based on the instruction information.

SGW-C 206 may initiate the PFCP (Packet Forwarding Control Plane (PFCP) protocol) session modification procedure towards the SGW-U 208 and in a PFCP Session Modification Request message, and the access side S5/8-U PGW F-TEID of the additional PGW-U 204 may be included. SGW-U 208 may switch a S5/8-U tunnel from the initial PGW-U 210 to the additional PGW-U 204.

Then PGW-U 210 performs data handling according to the instruction information. For downlink data both from the initial PGW-U 210 and the second data network 216, PGW-U 210 may send it to the SGW-U 108. For uplink data which is classified as the specified service such as LLC service, this data is directly sent to the second data network 216 for example over a SGi interface, and for other uplink data, it is sent to the initial PGW-U 210.

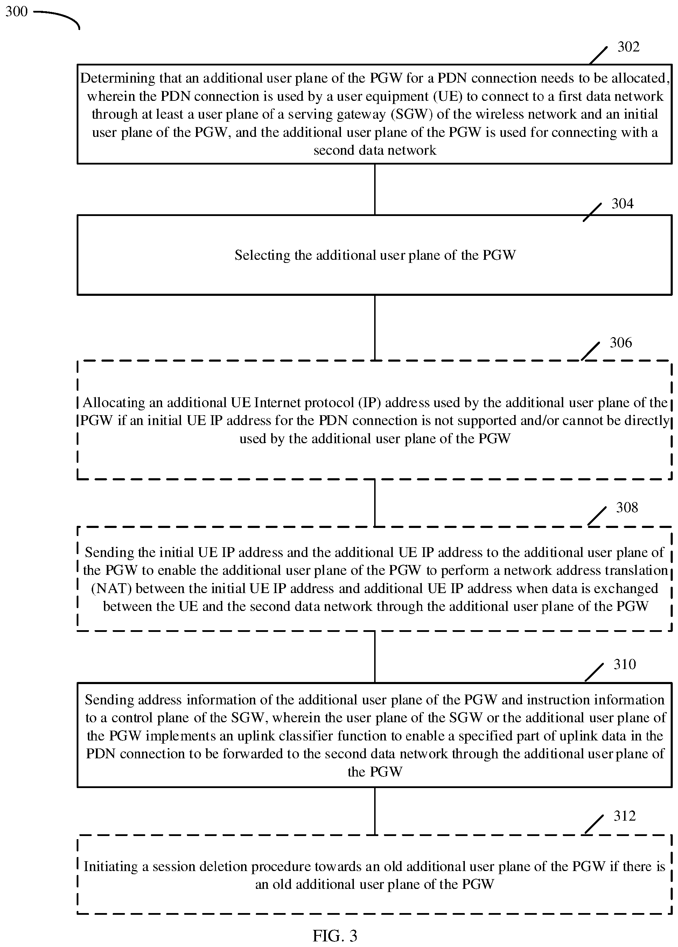

FIG. 3 shows a flowchart of a method according to an embodiment of the present disclosure. The method 300 is implemented at PGW-C in a wireless network such as PGW-Cs 106 and 206 as shown in FIGs. 1 and 2.

As shown in FIG. 3, the method 300 starts at block 302 where PGW-C determines that an additional PGW-U for a PDN connection needs to be allocated. The PDN connection is used by a UE to connect to a first data network through at least a SGW-U of the wireless network and an initial PGW-U. The additional PGW-U is used for connecting with a second data network. The first and second data networks may be same or, as according to the invention, different data networks. UE may access a service through the first or second data network and the service quality such as service latency provided by the first and second data network may be different. For example, if UE accesses the service through the second data network, UE may achieve low latency (as according to the invention) and/or low packet loss and/or low cost for the service as compare to accessing the service through the first data network.

PGW-C may determine that an additional PGW-U for a PDN connection needs to be allocated based on various criterions. In an embodiment, PGW-C may determine that the additional PGW-U for the PDN connection needs to be allocated based on at least one of a detection of a low latency communication service in the PDN connection, the UE's location change with ongoing low latency communication service (this criterion is required by the claimed invention), and a request from a network function such as AF (application function) or PCRF (Policy and Charging Rules Function). As an example, the operator may have prior knowledge of which applications (and which UEs) they want to provide with low latency. When the application detection is performed in the TDF, the PCRF may request the TDF to detect when a UE is using those applications. Upon the reporting of the detection of the application, the PCRF may request the PGW-C to use the low latency PGW-U for those applications. As another example, the allocation of the additional PGW-U for the PDN connection may be initiated by the PGW-C after the UE mobility event. As still another example, if AF is aware that edge compute resources are available in a Presence Reporting Area and that there is a PGW-U for breakout to the edge compute resources which can benefit from the UE. The AF may provide a trigger to the PCRF that the LLC is required for this service. Then this trigger may be provided to the PGW-C. As still another example, when the application detection is performed in the PCEF, the PCRF installs a PCC (Policy and Charging Control) rule including the SDF templates and an indication that the SDF requires a LLC PDN connection. Upon the detection of the SDF in the PCEF, the PGW-C may determine that an additional PGW-U for the PDN connection needs to be allocated.

At block 304, PGW-C selects the additional PGW-U. PGW-C may select the additional PGW-U based on various criterions. According to the invention, PGW-C selects the additional PGW-U which is close to the UE's location. For example, the PGW-C may use User Location Reporting/Presence Reporting Area to know the UE's current location, and then uses its Domain Name System (DNS) to determine the correct additional PGW-U. Then PGW-C may initiate a PFCP session establishment procedure towards the newly selected PGW-U to setup the PFCP session.

At block 306 (required according to the invention), if an initial UE IP address for the PDN connection is not supported and/or cannot be directly used by the additional PGW-U, then PGW-C allocates an additional UE IP address used by the additional PGW-U. For example, if the additional PGW-U is in the same IP domain as the initial PGW-U which means the initial UE IP address cannot be directly used by the additional PGW-U to route the traffic over SGi interface, PGW-C may allocate the additional UE IP address which is used by the additional PGW-U over SGi interface.

At block 308 (required according to the claimed invention), PGW-C sends the initial UE IP address and the additional UE IP address to the additional PGW-U to enable the additional PGW-U to perform NAT between the initial UE IP address and additional UE IP address when data is exchanged between the UE and the second data network through the additional PGW-U. For example, both the initial UE IP address and the additional UE IP address may be sent to the additional PGW-U for packet matching and network address translation as below:
● For uplink data: the additional PGW-U may use the initial UE IP address for packet matching and translate the initial UE IP address to the additional UE IP address when the specified part of uplink data is sent over for example the SGi interface;
● For downlink data: the additional PGW-U may use the additional UE IP address for packet matching and translate the additional UE IP address to the initial UE IP address when the downlink data is sent over for example a S5/8 interface.

At block 310, PGW-C sends address information of the additional PGW-U and instruction information to SGW-C. The address information comprises an IP address and a tunnel endpoint identifier. The instruction information is used by the SGW-C to instruct SGW-U to forward the uplink data in the PDN connection based on the instruction information. The address information and the instruction information may be comprised in any suitable message. For example, PGW-C may send an update bearer request or modify bearer response (if mobility procedure is ongoing) to the SGW-C to add the address information and the instruction information. For example, the address information such as S5/8-U PGW F-TEID of the additional PGW-U and the instruction information such as the corresponding SDF Filter and/or Application ID information may be included in the update bearer request or modify bearer response. The SDF Filter and/or Application ID information may indicate that service data flows for a specified service such as LLC should be delivered to the additional PGW-U. SGW-C may store the instruction information together with address information such as the S5/8-U PGW F-TEID of the additional PGW-U. If there is a mobility procedure (e.g., handover) ongoing with SGW-C relocation, PGW-C may include the address information and the instruction information in a Modify Bearer Response sent to a new SGW-C.

The SGW-U or, according to the invention, the additional PGW-U implement an uplink classifier function to enable a specified part of uplink data in the PDN connection to be forwarded to the second data network through the additional PGW-U. The specified part of uplink data may comprise any suitable service data such as low latency communication service data (required by the claimed invention).

In an embodiment not encompassed by the wording of the claims, the SGW-U implements the uplink classifier function and the instruction information may indicate that the specified part of uplink data in the PDN connection is forwarded to the second data network through the additional PGW-U and the other part of uplink data in the PDN connection is forwarded to the first data network through the initial PGW-U. For example, the SGW-U may already support uplink classifier function because when this SGW-U is selected, SGW-C may have already considered this based on an indication that this PDN connection is applicable for a specified service such as LLC. The address information of the additional PGW-U may comprise an IP address and a tunnel endpoint identifier of the additional PGW-U and the instruction information may comprise SDF filter and/or application ID information associated with the specified part of uplink data.

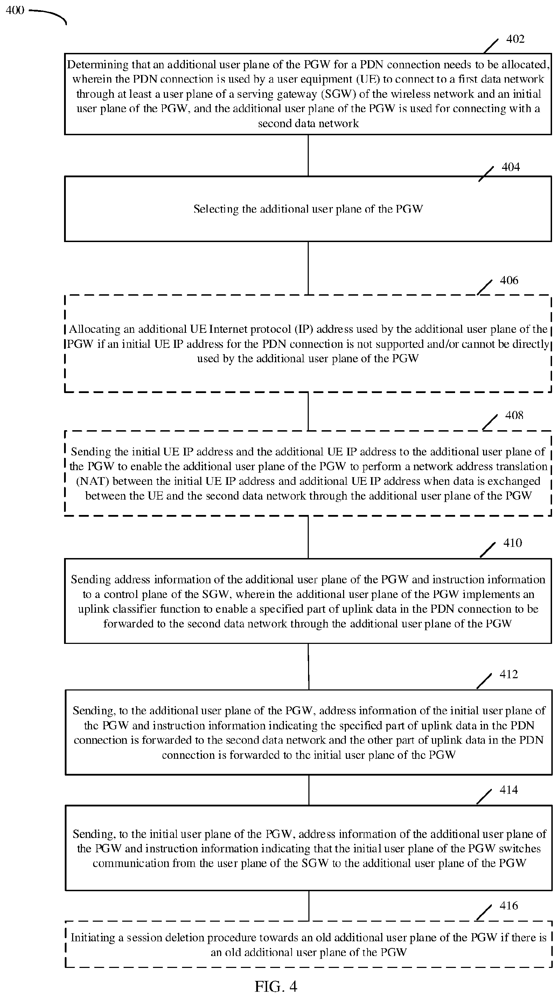

FIG. 4 shows a flowchart of a method according to another embodiment of the present disclosure. In this embodiment and according to the invention, the additional PGW-U implements the uplink classifier function and the instruction information indicates that all the uplink data in the PDN connection is forwarded to the additional PGW-U. The method 400 is implemented at a PGW-C such as PGW-Cs 106 and 206 as shown in FIGs. 1 and 2. For some parts which have been described in the above embodiments, detailed description thereof is omitted here for brevity.

As shown in FIG. 4, the method 400 comprises determining that an additional PGW-U for a PDN connection needs to be allocated at block 402; selecting the additional user plane of the PGW at block 404; allocating an additional UE Internet protocol (IP) address used by the additional user plane of the PGW if an initial UE IP address for the PDN connection is not supported and/or cannot be directly used by the additional user plane of the PGW at block 406; sending the initial UE IP address and the additional UE IP address to the additional user plane of the PGW to enable the additional user plane of the PGW to perform NAT between the initial UE IP address and additional UE IP address when data is exchanged between the UE and the second data network through the additional user plane of the PGW at block 408. Blocks 402, 404, 406 and 408 are similar to blocks 302, 304, 306 and 308 of FIG.3, and detailed description thereof is omitted here for brevity.

At block 410, PGW-C sends address information of the additional PGW-U and instruction information to the SGW-C. The address information comprises an IP address and a tunnel endpoint identifier. For example, PGW-C may send an update bearer request or modify bearer response (if mobility procedure is ongoing) to SGW-C. The address information such as access side S5/8-U PGW F-TEID of the additional PGW-U and the instruction information may be included in the update bearer request or modify bearer response. The access side S5/8-U PGW F-TEID of the additional PGW-U may be to replace the S5/8-U PGW F-TEID of the initial PGW-U. After receiving the address information and the instruction information, SGW-C may initiate a PFCP session modification procedure towards the SGW-U and in the PFCP Session Modification Request message which may comprise address information such as the access side S5/8-U PGW F-TEID of the additional PGW-U and the instruction information. SGW-U then switches the S5/8-U tunnel from initial PGW-U to the additional PGW-U after receiving the address information and the instruction information.

At block 412, PGW-C sends, to the additional PGW-U, address information of the initial PGW-U and instruction information indicating the specified part of uplink data in the PDN connection is forwarded to the second data network and the other part of uplink data in the PDN connection is forwarded to the initial PGW-U. The address information of the initial PGW-U comprises an IP address and a tunnel endpoint identifier of the initial PGW-U, and the instruction information sent to the additional PGW-U comprises service data flow filter and/or application identity information associated with the specified part of uplink data. For example, PGW-C may include SDF filter and/or application ID information in one or more PDRs (Packet Detection Rules) which may be used to match the specified service such as LLC service in the uplink data and PGW-C may also include PDRs to match other service data in the uplink data. PGW-C may include the S5/8-U F-TEID of the initial PGW-U in one or more FARs (Forward Action Rules) which may be used for routing other service in the uplink data such as non-LLC service.

At block 414, PGW-C sends, to the initial PGW-U, address information of the additional PGW-U and instruction information indicating that the initial PGW-U switches communication from the SGW-U to the additional PGW-U. In an embodiment, the address information of the additional PGW-U comprises an IP address and a tunnel endpoint identifier of the additional PGW-U. For example, PGW-C may initiate the PFCP session modification procedure towards the initial PGW-U. In PFCP Session Modification Request message, the IP address and the core side S5/8-U F-TEID information of the additional PGW-U may be included so that the initial PGW-U switches the S5/8-U tunnel from SGW-U to the additional PGW-U.

PGW-C initiates a session deletion procedure towards an old additional user plane of the PGW if there is an old additional user plane of the PGW at block 312 of Fig.3 and block 416 of Fig.4. For example, if there is already an old additional PGW-U allocated for the specified part of uplink data in the PDN connection and the PGW-C has known that the specified part of uplink data has been forwarded to the second data network through the new additional PGW-U, then PGW-C may initiate the PFCP session deletion procedure towards the old additional PGW-U.

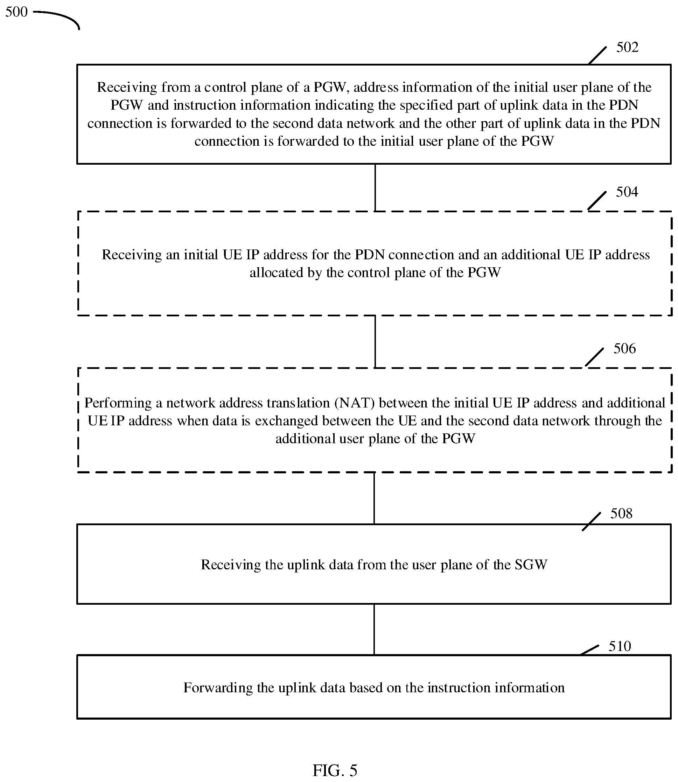

FIG. 5 shows a flowchart of a method for another embodiment of the present disclosure. The method 500 is implemented at an additional PGW-U in a wireless network. A PDN connection is used by a UE to connect to a first data network through at least a SGW-U of the wireless network and an initial PGW-U. The additional PGW-U is used for connecting with a second data network. For some parts which have been described in the above embodiments, detailed description thereof is omitted here for brevity.

As shown in FIG. 5, the method 500 starts at block 502 where the additional PGW-U receives, from a PGW-C, address information of the initial PGW-U and instruction information indicating the specified part of uplink data in the PDN connection is forwarded to the second data network and the other part of uplink data in the PDN connection is forwarded to the initial PGW-U. For example, PGW-C sends the address information and the instruction information at block 412 of Fig.4, and then the additional PGW-U receives this information.

The address information of the initial PGW-U comprises an IP address and a tunnel endpoint identifier of the initial PGW-U. The instruction information comprises service data flow filter and/or application identity information associated with the specified part of uplink data.

The specified part of uplink data comprises low latency communication service data.

At block 504 (required according to the invention), the additional PGW-U receives an initial UE IP address for the PDN connection and an additional UE IP address allocated by the PGW-C and perform NAT between the initial UE IP address and the additional UE IP address when data is exchanged between the UE and the second data network through the additional user plane of the PGW at block 506 (required according to the invention). For example, PGW-C sends the initial UE IP address and the additional UE IP address to the additional PGW-U at block 308 of Fig. 3 or block 408 of Fig. 4 as described above.

At block 508, the additional PGW-U receives the uplink data from SGW-U. PGW-C sends address information of the additional PGW-U and instruction information to SGW-C, wherein the instruction information indicates that all the uplink data in the PDN connection is forwarded to the additional PGW-U. Then SGW-C instructs SGW-U to forward all the uplink data in the PDN connection to the additional PGW-U.

At block 510, the additional PGW-U forwards the uplink data based on the instruction information. For example, if the specified part of uplink data is LLC service, as according to the invention, then for uplink data which is classified as the LLC service, the uplink data may be directly forwarded to the second data network for example over SGi interface and the other uplink data may be forwarded to the initial PGW-U. In addition, for downlink data both from the initial PGW-U and the second network, it may be sent to the SGW-U.

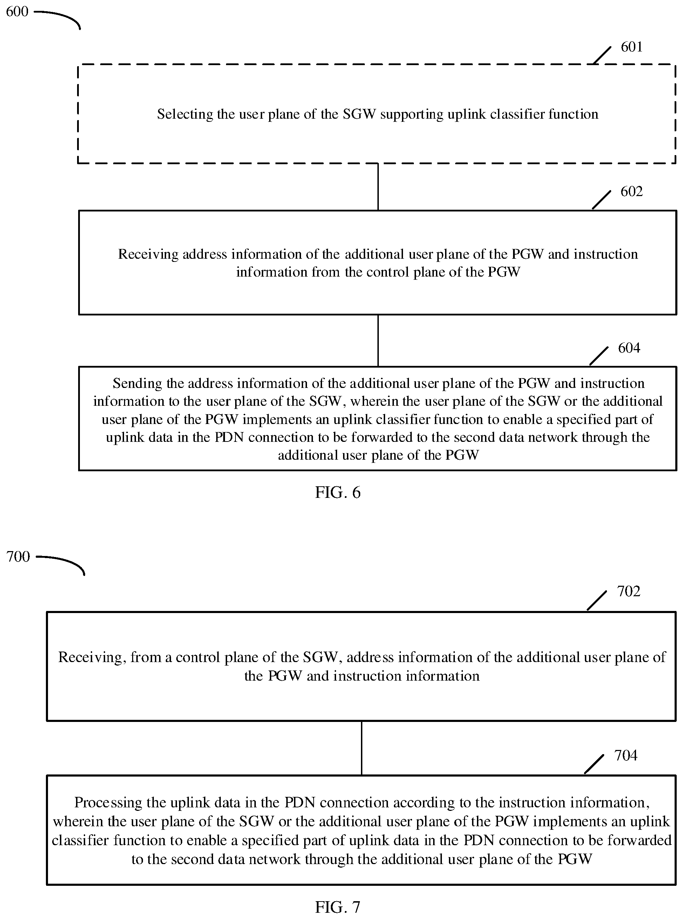

FIG. 6 shows a flowchart of a method for an embodiment of the present disclosure. The method 600 is implemented at a SGW-C in a wireless network. A PDN connection is used by a UE to connect to a first data network through at least a SGW-U of the wireless network and an initial PGW-U of the wireless network. The additional PGW-U is used for connecting with a second data network. The SGW-U or, according to the invention, the additional PGW-U implement an uplink classifier function to enable a specified part of uplink data in the PDN connection to be forwarded to the second data network through the additional PGW-U. For some parts which have been described in the above embodiments, detailed description thereof is omitted here for brevity.

As shown in FIG. 6, the method 600 starts at block 602 where SGW-C receives, from a PGW-C, address information of the additional PGW-U and instruction information from PGW-C. For example, PGW-C sends the address information and the instruction information at block 310 of Fig.3 or block 410 of Fig.4, and then the SGW-C receives this information.

At block 604, SGW-C sends the address information of the additional PGW-U and the instruction information to the SGW-U. In an embodiment, the information sent to the SGW-U may be included in a packet forwarding control protocol session modification request.

In an embodiment not encompassed by the wording of the claims, the method 600 may further comprise selecting the SGW-U supporting uplink classifier function at block 601 (optional). For example, SGW-C may select the SGW-U supporting uplink classifier function when the PDN connection is established based on an indication that the PDN connection is applicable for a specified service such as LLC.

In an embodiment not encompassed by the wording of the claims, the SGW-U may implement the uplink classifier function and the instruction information may indicate that the specified part of uplink data in the PDN connection is forwarded to the second data network through the additional user plane of the PGW and the other part of uplink data in the PDN connection is forwarded to the initial PGW-U through the PDN connection. In an embodiment, the address information may comprise an IP address and a tunnel endpoint identifier of the additional PGW-U and the instruction information may comprise service data flow filter and/or application identity information associated with the specified part of uplink data.

According to the invention, the additional PGW-U implements the uplink classifier function and the instruction information indicates that all the uplink data in the PDN connection is forwarded to the additional user plane of the PGW. The address information of the additional user plane of the PGW comprises an IP address and a tunnel endpoint identifier of the additional PGW-U.

FIG. 7 shows a flowchart of a method for an embodiment of the present disclosure. The method 700 is implemented at a SGW-U in a wireless network. A PDN connection is used by a UE to connect to a first data network through at least a SGW-U and an initial PGW-U of the wireless network. The additional PGW-U is used for connecting with a second data network. The SGW-U or, according to the invention, the additional PGW-U implement an uplink classifier function to enable a specified part of uplink data in the PDN connection to be forwarded to the second data network through the additional PGW-U. The specified part of uplink data comprises low latency communication service data. For some parts which have been described in the above embodiments, detailed description thereof is omitted here for brevity.

As shown in FIG. 7, the method 700 starts at block 702 where SGW-U receives, from a SGW-C, address information of the additional PGW-U and instruction information. For example, SGW-C sends to SGW-U the address information of the additional PGW-U and instruction information at block 604 of Fig.6. In an embodiment, the information received from the SGW-C may be included in a packet forwarding control protocol session modification request.

At block 704, SGW-U processes the uplink data in the PDN connection according to the instruction information.

In an embodiment not encompassed by the wording of the claims, the SGW-U implements the uplink classifier function and the instruction information may indicate that the specified part of uplink data in the PDN connection is forwarded to the second data network through the additional PGW-U and the other part of uplink data in the PDN connection is forwarded to the first data network through the initial PGW-U. In an embodiment, the address information may comprise an IP address and a tunnel endpoint identifier of the additional PGW-U and the instruction information comprises service data flow filter and/or application identity information associated with the specified part of uplink data. For example, if the specified part of uplink data is LLC service, then for uplink data which is classified as the LLC service, the uplink data may be directly forwarded to the additional PGW-U which may send it to the second data network for example over SGi interface and the other uplink data may be forwarded to the initial PGW-U. In addition, for downlink data both from the initial PGW-U and the additional PGW-U, it may be sent to the UE.

According to the invention, the additional PGW-U implements the uplink classifier function and the instruction information indicates that all the uplink data in the PDN connection is forwarded to the additional user plane of the PGW. The address information of the additional PGW-U comprises an IP address and a tunnel endpoint identifier of the additional user plane of the PGW. In this embodiment, SGW-C forwards all the uplink data to the additional PGW-U.

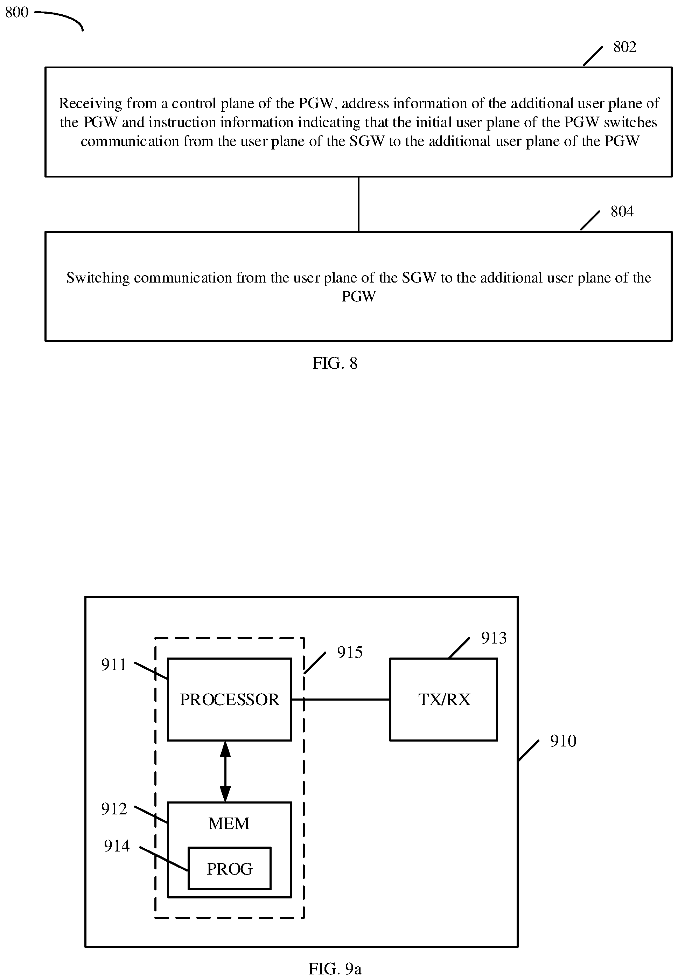

FIG. 8 shows a flowchart of a method for an embodiment of the present disclosure. The method 800 is implemented at an initial PGW-U in a wireless network. A PDN connection is used by a UE to connect to a first data network through at least a SGW-U of the wireless network and the initial PGW-U. An additional PGW-U is used for connecting with a second data network. The SGW-U or, according to the invention, the additional PGW-U implement an uplink classifier function to enable a specified part of uplink data in the PDN connection to be forwarded to the second data network through the additional PGW-U. The specified part of uplink data comprises low latency communication service data. For some parts which have been described in the above embodiments, detailed description thereof is omitted here for brevity.

As shown in FIG. 8, the method 800 starts at block 802 where the initial PGW-U receives from a PGW-C, address information of the additional PGW-U and instruction information indicating that the initial PGW-U switches communication from the SGW-U to the additional PGW-U.

At block 804, the initial PGW-U switches communication from the SGW-U to the additional PGW-U.

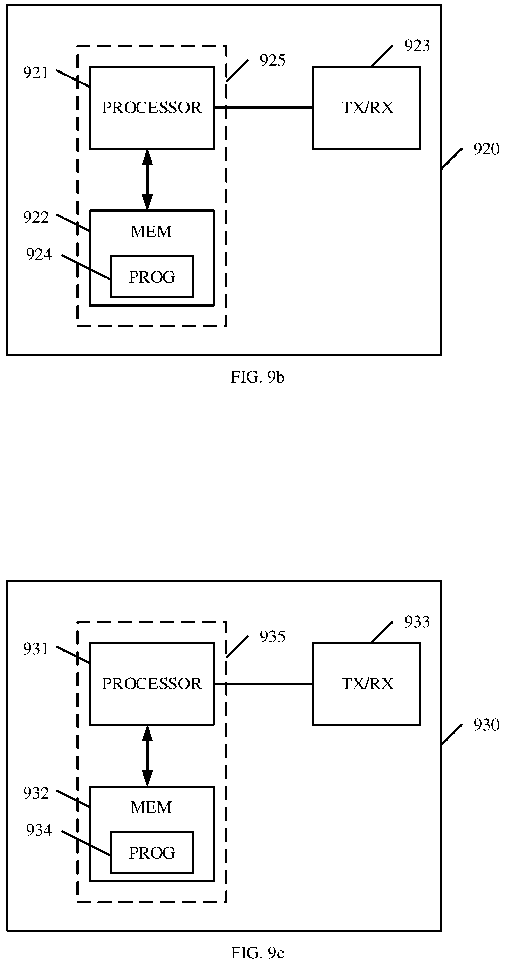

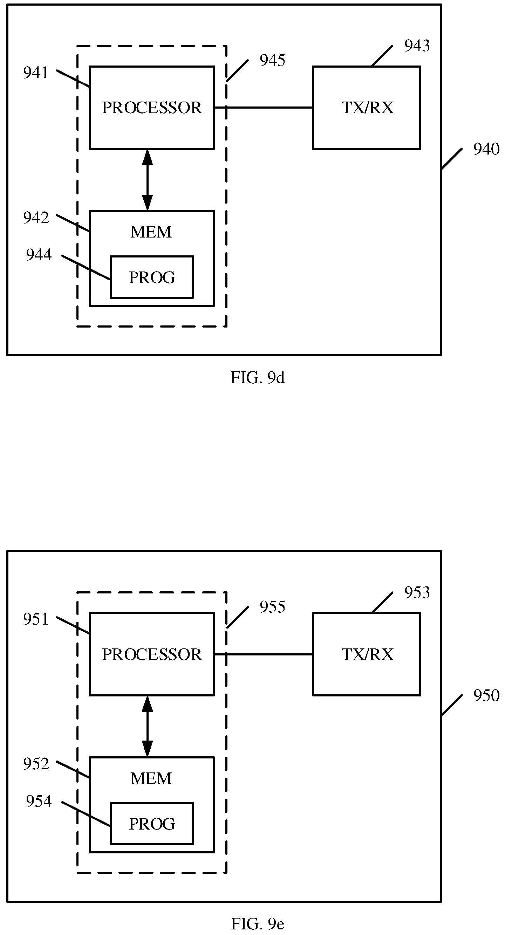

FIG. 9a illustrates a simplified block diagram of an apparatus 910 that is embodied in/as PGW-C in a wireless network according to an embodiment of the present disclosure. FIG. 9b illustrates an apparatus 920 that is embodied in/as an additional PGW-U in a wireless network for use in an embodiment of the present disclosure. FIG. 9c shows an apparatus 930 that is embodied in/as a SGW-C in a wireless network for use in an embodiment of the present disclosure. FIG. 9d shows an apparatus 940 that is embodied in/as a SGW-U in a wireless network for use in an embodiment of the present disclosure. FIG. 9e shows an apparatus 950 that may be embodied in/as an initial PGW-U in a wireless network for use in an embodiment of the present disclosure.

The apparatus 910 comprises at least one processor 911, such as a data processor (DP) and at least one memory (MEM) 912 coupled to the processor 911. The apparatus 910 may further comprise a transmitter TX and receiver RX 913 coupled to the processor 911. The MEM 912 stores a program (PROG) 914. The PROG 914 includes instructions that, when executed on the associated processor 911, enable the apparatus 910 to operate in accordance with the embodiments of the present disclosure, for example to perform the methods 300, 400. A combination of the at least one processor 911 and the at least one MEM 912 may form processing means 915 adapted to implement various embodiments of the present disclosure.

The apparatus 920 comprises at least one processor 921, such as a DP, and at least one MEM 922 coupled to the processor 921. The apparatus 920 may further comprise a transmitter TX and receiver RX 923 coupled to the processor 921. The MEM 922 stores a PROG 924. The PROG 924 includes instructions that, when executed on the associated processor 921, enable the apparatus 920 to operate in accordance with the embodiments of the present disclosure, for example to perform the method 500. A combination of the at least one processor 921 and the at least one MEM 922 may form processing means 925 adapted to implement various embodiments of the present disclosure.

The apparatus 930 comprises at least one processor 931, such as a DP, and at least one MEM 932 coupled to the processor 931. The apparatus 930 may further comprise a transmitter TX and receiver RX 933 coupled to the processor 931. The MEM 932 stores a PROG 934. The PROG 934 includes instructions that, when executed on the associated processor 921, enable the apparatus 930 to operate in accordance with the embodiments of the present disclosure, for example to perform the method 600. A combination of the at least one processor 931 and the at least one MEM 932 may form processing means 935 adapted to implement various embodiments of the present disclosure.

The apparatus 940 comprises at least one processor 941, such as a data processor (DP) and at least one memory (MEM) 942 coupled to the processor 941. The apparatus 940 may further comprise a transmitter TX and receiver RX 943 coupled to the processor 941. The MEM 942 stores a program (PROG) 944. The PROG 944 includes instructions that, when executed on the associated processor 941, enable the apparatus 940 to operate in accordance with the embodiments of the present disclosure, for example to perform the method 700. A combination of the at least one processor 941 and the at least one MEM 942 may form processing means 945 adapted to implement various embodiments of the present disclosure.

The apparatus 950 comprises at least one processor 951, such as a data processor (DP) and at least one memory (MEM) 952 coupled to the processor 951. The apparatus 950 may further comprise a transmitter TX and receiver RX 953 coupled to the processor 951. The MEM 952 stores a program (PROG) 954. The PROG 954 includes instructions that, when executed on the associated processor 951, enable the apparatus 950 to operate in accordance with the embodiments of the present disclosure, for example to perform the method 800. A combination of the at least one processor 951 and the at least one MEM 952 may form processing means 955 adapted to implement various embodiments of the present disclosure.

Various embodiments of the present disclosure may be implemented by computer program executable by one or more of the processors 911, 921 931, 941 and 951, software, firmware, hardware or in a combination thereof.

The MEMs 912, 922, 932, 942 and 952 may be of any type suitable to the local technical environment and may be implemented using any suitable data storage technology, such as semiconductor based memory devices, magnetic memory devices and systems, optical memory devices and systems, fixed memory and removable memory, as non-limiting examples.

The processors 911, 921 931, 941 and 951 may be of any type suitable to the local technical environment, and may include one or more of general purpose computers, special purpose computers, microprocessors, digital signal processors DSPs and processors based on multicore processor architecture, as non-limiting examples.

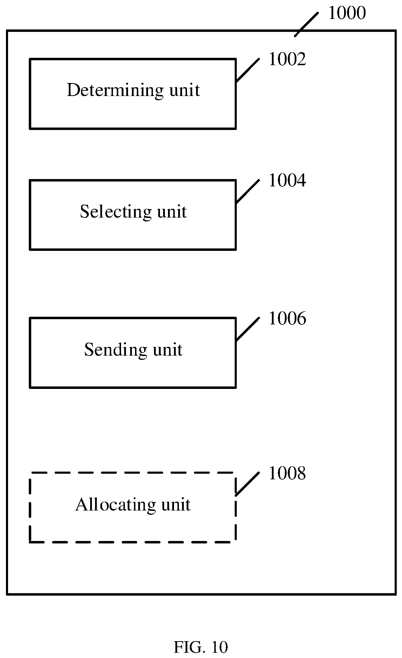

Reference is now made to FIG. 10, which illustrates a schematic block diagram of an apparatus 1000 for PGW-C in a wireless network. The apparatus 1000 is operable to carry out the exemplary methods 300, 400 described with reference to FIGs. 3-4 and possibly any other processes or methods.

As shown in FIG. 10, the apparatus 1000 comprises: a determining unit 1002 configured to determine that an additional user plane of the PGW for a PDN connection needs to be allocated, wherein the PDN connection is used by a user equipment (UE) to connect to a first data network through at least a user plane of a serving gateway (SGW) of the wireless network and an initial user plane of the PGW, and the additional user plane of the PGW is used for connecting with a second data network; a selecting unit 1004 configured to select the additional user plane of the PGW; a sending unit 1006 configured to send address information of the additional user plane of the PGW and instruction information to a control plane of the SGW, wherein the user plane of the SGW or, according to the invention, the additional user plane of the PGW implements an uplink classifier function to enable a specified part of uplink data in the PDN connection to be forwarded to the second data network through the additional user plane of the PGW.

The determining unit 1002 is configured to determine that an additional user plane of the PGW for a PDN connection needs to be allocated based on at least one of a detection of a low latency communication service in the PDN connection, the UE's location change with ongoing low latency communication service (this is required according to the invention), and a request from a network function.

The selecting unit 1004 is configured to select the additional user plane of the PGW which comprises selecting the additional user plane of the PGW which is close to the UE's location.

The apparatus 1000 further comprises: an allocating unit 1008 configured to allocate an additional UE Internet protocol (IP) address used by the additional user plane of the PGW if an initial UE IP address for the PDN connection is not supported and/or cannot be directly used by the additional user plane of the PGW; and the sending unit 1006 is configured to send the initial UE IP address and the additional UE IP address to the additional user plane of the PGW to enable the additional user plane of the PGW to perform a network address translation (NAT) between the initial UE IP address and additional UE IP address when data is exchanged between the UE and the second data network through the additional user plane of the PGW.

In an embodiment not encompassed by the wording of the claims, the user plane of the SGW implements the uplink classifier function, the instruction information indicates that the specified part of uplink data in the PDN connection is forwarded to the second data network through the additional user plane of the PGW and the other part of uplink data in the PDN connection is forwarded to the first data network through the initial user plane of the PGW.

In an embodiment, the address information of the additional user plane of the PGW comprises an IP address and a tunnel endpoint identifier of the additional user plane of the PGW and the instruction information comprises service data flow filter and/or application identity information associated with the specified part of uplink data.

According to the invention, the additional user plane of the PGW implements the uplink classifier function and the instruction information indicates that all the uplink data in the PDN connection is forwarded to the additional user plane of the PGW, and the sending unit 1006 is configured to send, to the additional user plane of the PGW, address information of the initial user plane of the PGW and instruction information indicating the specified part of uplink data in the PDN connection is forwarded to the second data network and the other part of uplink data in the PDN connection is forwarded to the initial user plane of the PGW; and send to the initial user plane of the PGW, address information of the additional user plane of the PGW and instruction information indicating that the initial user plane of the PGW switches communication from the user plane of the SGW to the additional user plane of the PGW.

The address information of the additional user plane of the PGW comprises an IP address and a tunnel endpoint identifier of the additional user plane of the PGW, the address information of the initial user plane of the PGW comprises an IP address and a tunnel endpoint identifier of the initial user plane of the PGW, and the instruction information sent to the additional user plane of the PGW comprises service data flow filter and/or application identity information associated with the specified part of uplink data.

In an embodiment, the apparatus 1000 may further comprise a deleting unit 1010 (optional) configured to initiate a session deletion procedure towards an old additional user plane of the PGW if there is an old additional user plane of the PGW.

In an embodiment, the information sent to the control plane of the SGW is included in an update bearer request or a modify bearer response.

The specified part of uplink data comprises low latency communication service data.

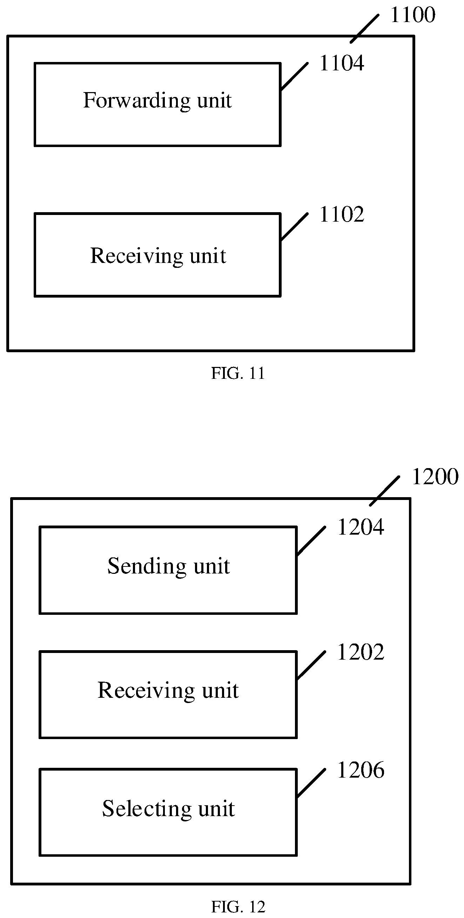

Reference is now made to FIG. 11, which illustrates a schematic block diagram of an apparatus 1000 for PGW-C in a wireless network. A PDN connection is used by a user equipment (UE) to connect to a first data network through at least a user plane of a serving gateway (SGW) of the wireless network and an initial user plane of the PGW, the additional user plane of the PGW is used for connecting with a second data network. The apparatus 1100 is operable to carry out the exemplary method 500 described with reference to FIG. 5 and possibly any other processes or methods.

As shown in FIG. 11, the apparatus 1100 comprises: an receiving unit 1102 configured to receive from a control plane of a PGW, address information of the initial user plane of the PGW and instruction information indicating the specified part of uplink data in the PDN connection is forwarded to the second data network and the other part of uplink data in the PDN connection is forwarded to the initial user plane of the PGW; the receiving unit 1102 is further configured to receive the uplink data from the user plane of the SGW; and an forwarding unit 1104 configured to forward the uplink data based on the instruction information.

The apparatus 1100 comprises: the receiving unit 1102 further configured to receive an initial UE IP address for the PDN connection and an additional UE IP address allocated by the control plane of the PGW; and a NAT unit 1106 further configured to perform a network address translation (NAT) between the initial UE IP address and additional UE IP address when data is exchanged between the UE and the second data network through the additional user plane of the PGW.

The address information of the initial user plane of the PGW comprises an IP address and a tunnel endpoint identifier of the initial user plane of the PGW, and the instruction information comprises service data flow filter and/or application identity information associated with the specified part of uplink data.

The specified part of uplink data comprises low latency communication service data.

Reference is now made to FIG. 12, which illustrates a schematic block diagram of an apparatus 1200 for SGW-C in a wireless network. A packet data network (PDN) connection is used by a user equipment (UE) to connect to a first data network through at least a user plane of the SGW and an initial user plane of a PDN gateway (PGW) of the wireless network, and the additional user plane of the PGW is used for connecting with a second data network. The apparatus 1200 is operable to carry out the exemplary method 600 described with reference to FIG. 6 and possibly any other processes or methods.

As shown in FIG. 12, the apparatus 1200 comprises: a receiving unit 1202 configured to receive address information of the additional user plane of the PGW and instruction information from the control plane of the PGW; and a sending unit 1204 configured to send the address information of the additional user plane of the PGW and instruction information to the user plane of the SGW, wherein the user plane of the SGW or, according to the invention, the additional user plane of the PGW implements an uplink classifier function to enable a specified part of uplink data in the PDN connection to be forwarded to the second data network through the additional user plane of the PGW.

In an embodiment not encompassed by the wording of the claims, the apparatus 1200 may further comprise a selecting unit 1206 (optional) configured to select the user plane of the SGW supporting uplink classifier function, wherein the user plane of the SGW implements the uplink classifier function and the instruction information indicates that the specified part of uplink data in the PDN connection is forwarded to the second data network through the additional user plane of the PGW and the other part of uplink data in the PDN connection is forwarded to the initial user plane of the PGW through the PDN connection.

In an embodiment, the address information comprises an IP address and a tunnel endpoint identifier of the additional user plane of the PGW and the instruction information comprises service data flow filter and/or application identity information associated with the specified part of uplink data.

According to the invention, the additional user plane of the PGW implements the uplink classifier function and the instruction information indicates that all the uplink data in the PDN connection is forwarded to the additional user plane of the PGW.

The address information of the additional user plane of the PGW comprises an IP address and a tunnel endpoint identifier of the additional user plane of the PGW.

In an embodiment, the information sent to the user plane of the SGW is included in a packet forwarding control protocol session modification request.

The specified part of uplink data comprises low latency communication service data.

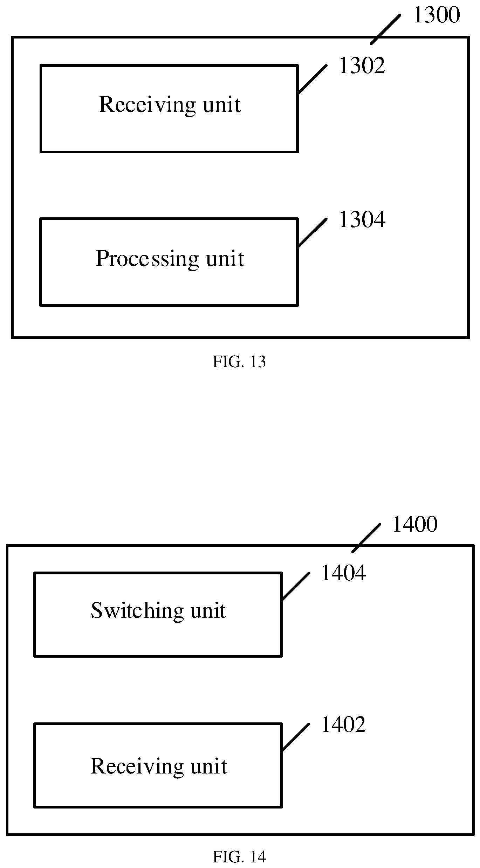

Reference is now made to FIG. 13, which illustrates a schematic block diagram of an apparatus 1300 for SGW-U in a wireless network. A packet data network (PDN) connection is used by a user equipment (UE) to connect to a first data network through at least a user plane of the SGW and an initial user plane of a PDN gateway (PGW) of a wireless network, the additional user plane of the PGW is used for connecting with a second data network. The apparatus 1300 is operable to carry out the exemplary method 700 described with reference to FIG. 7 and possibly any other processes or methods.

As shown in FIG. 13, the apparatus 1300 comprises: a receiving unit 1302 configured to receive, from a control plane of the SGW, address information of the additional user plane of the PGW and instruction information; and a processing unit 1304 configured to process the uplink data in the PDN connection according to the instruction information, wherein the user plane of the SGW or, according to the invention, the additional user plane of the PGW implements an uplink classifier function to enable a specified part of uplink data in the PDN connection to be forwarded to the second data network through the additional user plane of the PGW.

In an embodiment not encompassed by the wording of the claims, the user plane of the SGW implements the uplink classifier function and the instruction information indicates that the specified part of uplink data in the PDN connection is forwarded to the second data network through the additional user plane of the PGW and the other part of uplink data in the PDN connection is forwarded to the first data network through the initial user plane of the PGW.

In an embodiment, the address information comprises an IP address and a tunnel endpoint identifier of the additional user plane of the PGW and the instruction information comprises service data flow filter and/or application identity information associated with the specified part of uplink data.

According to the invention, the additional user plane of the PGW implements the uplink classifier function and the instruction information indicates that all the uplink data in the PDN connection is forwarded to the additional user plane of the PGW.

The address information of the additional user plane of the PGW comprises an IP address and a tunnel endpoint identifier of the additional user plane of the PGW.

In an embodiment, the information received from the control plane of the SGW is included in a packet forwarding control protocol session modification request.

The specified part of uplink data comprises low latency communication service data.

Reference is now made to FIG. 14, which illustrates a schematic block diagram of an apparatus 1400 for an initial PGW-U in a wireless network. A PDN connection is used by a user equipment (UE) to connect to a first data network through at least a user plane of a serving gateway (SGW) of the wireless network and the initial user plane of the PGW, an additional user plane of the PGW is used for connecting with a second data network, and the additional user plane of the PGW implements an uplink classifier function to enable a specified part of uplink data in the PDN connection to be forwarded to the second data network through the additional user plane of the PGW. The apparatus 1400 is operable to carry out the exemplary method 800 described with reference to FIG. 8 and possibly any other processes or methods.

As shown in FIG. 14, the apparatus 1400 comprises: an receiving unit 1402 configured to receive from a control plane of the PGW, address information of the additional user plane of the PGW and instruction information indicating that the initial user plane of the PGW switches communication from the user plane of the SGW to the additional user plane of the PGW; and a switching unit 1404 configured to switch communication from the user plane of the SGW to the additional user plane of the PGW.

The address information of the additional user plane of the PGW comprises an IP address and a tunnel endpoint identifier of the additional user plane of the PGW.

It would be appreciated that, some units or modules in the apparatus 1000, 1100, 1200, 1300 or 1400 can be combined in some implementations. For example, in one embodiment, it is possible to use a single transceiving unit to send and receive the information.

According to an aspect of the disclosure it is provided a computer program product being tangibly stored on a computer readable storage medium and including instructions which, when executed on at least one processor, cause the at least one processor to carry out the method related to PGW-C as described above, such as the methods 300 and 400 and a part of methods 300 and 400.

According to an aspect of the disclosure it is provided a computer program product being tangibly stored on a computer readable storage medium and including instructions which, when executed on at least one processor, cause the at least one processor to carry out the method related to the additional PGW-U as described above, such as the method 500 and a part of method 500.

According to an aspect of the disclosure it is provided a computer program product being tangibly stored on a computer readable storage medium and including instructions which, when executed on at least one processor, cause the at least one processor to carry out the method related to SGW-C as described above, such as the method 600 and a part of method 600.

According to an aspect of the disclosure it is provided a computer program product being tangibly stored on a computer readable storage medium and including instructions which, when executed on at least one processor, cause the at least one processor to carry out the method related to SGW-U as described above, such as the method 700 and a part of method 700.

According to an aspect of the disclosure it is provided a computer program product being tangibly stored on a computer readable storage medium and including instructions which, when executed on at least one processor, cause the at least one processor to carry out the method related to the initial PGW-U as described above, such as the method 800 and a part of method 800.

The embodiments of present disclosure provide support for a specified service, namely low latency communication service, without deleting the old PDN connection and establishing a new PDN connection.

In addition, the present disclosure may also provide a carrier containing the computer program as mentioned above, wherein the carrier is one of an electronic signal, optical signal, radio signal, or computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function, or means that may be configured to perform two or more functions. For example, these techniques may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Exemplary embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in the context of separate embodiments may also be implemented in combination in a single embodiment.

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment.

It will be obvious to a person skilled in the art that, as the technology advances, the inventive concept can be implemented in various ways. The above described embodiments are given for describing rather than limiting the disclosure. The protection scope of the disclosure is defined by the accompanying claims.

## Claims

1. A method (300) implemented at a control plane of a packet data network, PDN, gateway, PGW, PGW-C, (102, 202) in a wireless network, comprising:
determining (302), based on a location change of a user equipment, UE, (112, 212) with ongoing low latency communication service, that an additional user plane of the PGW, PGW-U, (104, 204) for a PDN connection needs to be allocated, wherein the PDN connection is used by a user equipment, UE, (112, 212) to connect to a first data network (114, 214) through at least a user plane of a serving gateway, SGW, SGW-U, (108, 208) of the wireless network and an initial PGW-U (110, 210), and the additional PGW-U (104, 204) is used for connecting with a second data network (116, 216), wherein the additional PGW-U (104, 204) is added to the PDN connection, and wherein the first data network (114, 214) and the second data network (116, 216) are different data networks;
selecting (304) the additional PGW-U (104, 204), wherein selecting the additional PGW-U (104, 204) comprises selecting the additional PGW-U (104, 204) which is close to the UE's (112, 212) location;
allocating (306) an additional UE Internet protocol, IP, address used by the additional PGW-U (104, 204) if an initial UE IP address for the PDN connection is not supported and/or cannot be directly used by the additional PGW-U (104, 204); and
sending (308) the initial UE IP address and the additional UE IP address to the additional PGW-U (104, 204) to enable the additional PGW-U (104, 204) to perform a network address translation, NAT, between the initial UE IP address and additional UE IP address when data is exchanged between the UE and the second data network (116, 216) through the additional PGW-U (104, 204);
sending (310) address information of the additional PGW-U (104, 204) and instruction information to a SGW-C (106, 206), wherein the instruction information indicates that all the uplink data in the PDN connection is forwarded to the additional PGW-U (104, 204), enabling the SGW-C (106, 206) to instruct to the SGW-U (108, 208) to forward the uplink data in the PDN connection based on the instruction information, and wherein the address information of the additional PGW-U (104, 204) comprises an IP address and a tunnel endpoint identifier of the additional PGW-U (104, 204);
wherein the additional PGW-U (104, 204) implements an uplink classifier function to enable a specified part of uplink data in the PDN connection to be forwarded to the second data network (116, 216) through the additional PGW-U (104, 204), wherein the specified part of uplink data comprises low latency communication service data; and
sending (412), to the additional PGW-U (104, 204), address information of the initial PGW-U (110, 210) and instruction information indicating the specified part of uplink data in the PDN connection is forwarded to the second data network (116, 216) and the other part of uplink data in the PDN connection is forwarded to the initial PGW-U (110, 210), wherein the address information of the initial PGW-U comprises an IP address and a tunnel endpoint identifier of the initial PGW-U, and the instruction information sent to the additional PGW-U comprises service data flow filter and/or application identity information associated with the specified part of uplink data,
sending (414), to the initial PGW-U (110, 210), address information of the additional PGW-U (104, 204) and instruction information indicating that the initial PGW-U (110, 210) switches communication from the SGW-U (108, 208) to the additional PGW-U (104, 204),
initiating (312, 416) a session deletion procedure towards an old additional PGW-U if there is an old additional PGW-U.

2. The method according to claim 1, wherein determining that an additional PGW-U (104, 204) for a PDN connection needs to be allocated further comprises:
determining that an additional PGW-U (104, 204) for a PDN connection needs to be allocated based on at least one of a detection of a low latency communication service in the PDN connection and a request from a network function.

3. A method implemented by a system comprising an additional packet data network, PDN, gateway, PGW, user plane function, PGW-U, (104, 204), an initial PGW-U (110, 210), a serving gateway, SGW, control plane function, SGW-C, (106, 206) and an SGW user plane function, SGW-U, (108, 208), wherein a PDN connection is used by a user equipment, UE, (112, 212) to connect to a first data network (114, 214) through at least the SGW-U (108, 208) of the wireless network and the initial PGW-U (110, 210), and the additional PGW-U (104, 204) is used for connecting with a second data network (116, 216), wherein the additional PGW-U (104, 204) is added to the PDN connection, and wherein the first data network (114, 214) and the second data network (116, 216) are different data networks, wherein the additional PGW-U (104, 204) implements an uplink classifier function to enable a specified part of uplink data in the PDN connection to be forwarded to the second data network (116, 216) through the additional PGW-U (104, 204), wherein the specified part of uplink data comprises low latency communication service data;
wherein the additional PGW-U (104, 204):
receives (502) from a control plane of a packet data network, PDN, gateway, PGW, PGW-C (102, 202), address information of the initial PGW-U (110, 210) and instruction information indicating a specified part of uplink data in the PDN connection is forwarded to the second data (116, 216) network and the other part of uplink data in the PDN connection is forwarded to the initial PGW-U (110, 210), wherein the address information of the initial PGW-U (110, 210) comprises an IP address and a tunnel endpoint identifier of the initial PGW-U (110, 210), and the instruction information comprises service data flow filter and/or application identity information associated with the specified part of uplink data; receiving (502), from the PGW-C (102, 202), an initial UE IP address for the PDN connection and an additional UE IP address allocated by the PGW-U (102, 202);
performs (506) a network address translation, NAT, between the initial UE IP address and additional UE IP address when data is exchanged between the UE (112, 212) and the second data network (116, 216) through the additional PGW-U (104, 204);
receives (508) the uplink data from the SGW-U (108, 208); and
forwards (510) the uplink data based on the instruction information;
and wherein the SGW-C (106, 206):
receives (602) address information of the additional PGW-U (104, 204) and instruction information from PGW-C (102, 202), wherein the instruction information indicates that all the uplink data in the PDN connection is forwarded to the additional PGW-U (104, 204), and wherein the address information of the additional PGW-U (104, 204) comprises an IP address and a tunnel endpoint identifier of the additional PGW-U (104, 204); and
sends (604) the address information of the additional PGW-U (104, 204) and instruction information to the SGW-U (108, 208),
and wherein the SGW-U (108, 208):
receives (702), from the SGW-C (106, 206), address information of the additional PGW-U (104, 204) and instruction information, wherein the instruction information indicates that all the uplink data in the PDN connection is forwarded to the additional PGW-U (104, 204), and wherein the address information of the additional PGW-U (104, 204) comprises an IP address and a tunnel endpoint identifier of the additional PGW-U (104, 204); and
processes (704) the uplink data in the PDN connection according to the instruction information,
and wherein the initial PGW-U (110, 210):
receives (802) from the PGW-C (102, 202), address information of the additional PGW-C (104, 204) and instruction information indicating that the initial PGW-U (110, 210) switches communication from the SGW-U (108, 208) to the additional PGW-U (104, 204), wherein the address information of the additional PGW-U (104, 204) comprises an IP address and a tunnel endpoint identifier of the additional user plane of the PGW (104, 204); and
switches (804) communication from the SGW-U (108, 208) to the additional PGW-U (104, 204).

4. An apparatus (910) for a control plane of a packet data network, PDN, gateway, PGW, PGW-C (102, 202) in a wireless network, comprising:
a processor (911); and
a memory (912) coupled to the processor, said memory containing instructions executable by said processor (911), whereby said apparatus (910) is operative to:
determine, based on a location change of a user equipment, UE, (112, 212) with ongoing low latency communication service, that an additional PGW-U (104, 204) for a PDN connection needs to be allocated, wherein the PDN connection is used by a user equipment, UE, (112, 212) to connect to a first data network (114, 214) through at least a user plane of a serving gateway, SGW-U, (108, 208) of the wireless network and an initial PGW-U (110, 210), and the additional PGW-U (104, 204) is used for connecting with a second data network (116, 216), wherein the additional PGW-U (104, 204) is added to the PDN connection, and wherein the first data network (114, 214) and the second data network (116, 216) are different data networks;
select the additional PGW-U (104, 204), wherein to select the additional PGW-U (104, 204) comprises to select the additional PGW-U (104, 204) which is close to the UE's (112, 212) location;
allocate an additional UE Internet protocol, IP, address used by the additional PGW-U (104, 204) if an initial UE IP address for the PDN connection is not supported and/or cannot be directly used by the additional PGW-U (104, 204); and
send the initial UE IP address and the additional UE IP address to the additional PGW-U (104, 204) to enable the additional PGW-U (104, 204) to perform a network address translation, NAT, between the initial UE IP address and additional UE IP address when data is exchanged between the UE and the second data network (116, 216) through the additional PGW-U (104, 204); and
send address information of the additional PGW-U (104, 204) and instruction information to a SGW-C (106, 206), wherein the instruction information indicates that all the uplink data in the PDN connection is forwarded to the additional PGW-U (104, 204), enabling the SGW-C (106, 206) to instruct to the SGW-U (108, 208) to forward the uplink data in the PDN connection based on the instruction information, and wherein the address information of the additional PGW-U (104, 204) comprises an IP address and a tunnel endpoint identifier of the additional PGW-U (104, 204);
wherein the additional PGW-U (104, 204) implements an uplink classifier function to enable a specified part of uplink data in the PDN connection to be forwarded to the second data network (116, 216) through the additional PGW-U (104, 204);
send, to the additional PGW-U (104, 204), address information of the initial PGW-U (110, 210) and instruction information indicating the specified part of uplink data in the PDN connection is forwarded to the second data network (116, 216) and the other part of uplink data in the PDN connection is forwarded to the initial PGW-U (110, 210), wherein the address information of the initial PGW-U comprises an IP address and a tunnel endpoint identifier of the initial PGW-U, and the instruction information sent to the additional PGW-U comprises service data flow filter and/or application identity information associated with the specified part of uplink data,
send, to the initial PGW-U (110, 210), address information of the additional PGW-U (104, 204) and instruction information indicating that the initial PGW-U (110, 210) switches communication from the SGW-U (108, 208) to the additional PGW-U (104, 204).

## Patentansprüche

1. Verfahren (300), das auf einer Steuerungsebene eines Paketdatennetz-Gateways, PDN-Gateways, PGW, PGW-C, (102, 202) in einem Drahtlosnetz implementiert wird, umfassend:
Bestimmen (302), basierend auf einer Positionsänderung einer Benutzereinrichtung, UE, (112, 212) mit laufendem Kommunikationsdienst mit geringer Latenz, dass eine zusätzliche Benutzerebene des PGW, PGW-U, (104, 204) für eine PDN-Verbindung zugewiesen werden muss, wobei die PDN-Verbindung durch eine Benutzereinrichtung, UE, (112, 212) verwendet wird, um sich mit einem ersten Datennetz (114, 214) über mindestens eine Benutzerebene eines Serving Gateway, SGW, SGW-U, (108, 208) des Drahtlosnetzes und eine initiale PGW-U (110, 210) zu verbinden, und die zusätzliche PGW-U (104, 204) zum Verbinden mit einem zweiten Datennetz (116, 216) verwendet wird, wobei die zusätzliche PGW-U (104, 204) zu der PDN-Verbindung hinzugefügt wird, und wobei das erste Datennetz (114, 214) und das zweite Datennetz (116, 216) unterschiedliche Datennetze sind;
Auswählen (304) der zusätzlichen PGW-U (104, 204), wobei das Auswählen der zusätzlichen PGW-U (104, 204) das Auswählen der zusätzlichen PGW-U (104, 204), die nahe an der Position der UE (112, 212) ist, umfasst;
Zuweisen (306) einer zusätzlichen UE-Internetprotokoll-Adresse, IP-Adresse, die durch die zusätzliche PGW-U (104, 204) verwendet wird, falls eine initiale UE-IP-Adresse für die PDN-Verbindung nicht unterstützt wird und/oder durch die die zusätzliche PGW-U (104, 204) nicht direkt verwendet werden kann; und
Senden (308) der initialen UE-IP-Adresse und der zusätzlichen UE-IP-Adresse an die zusätzliche PGW-U (104, 204), um der zusätzlichen PGW-U (104, 204) zu ermöglichen, eine Netzadressübersetzung, NAT, zwischen der initialen UE-IP-Adresse und der zusätzlichen UE-IP-Adresse durchzuführen, wenn Daten zwischen der UE und dem zweiten Datennetz (116, 216) über die zusätzliche PGW-U (104, 204) ausgetauscht werden;
Senden (310) von Adressinformationen der zusätzlichen PGW-U (104, 204) und Anweisungsinformationen an eine SGW-C (106, 206), wobei die Anweisungsinformationen angeben, dass alle Uplink-Daten in der PDN-Verbindung an die zusätzliche PGW-U (104, 204) weitergeleitet werden, wobei der SGW-C (106, 206) ermöglicht wird, die SGW-U (108, 208) anzuweisen, die Uplink-Daten in der PDN-Verbindung basierend auf den Anweisungsinformationen weiterzuleiten, und wobei die Adressinformationen der zusätzlichen PGW-U (104, 204) eine IP-Adresse und eine Tunnelendpunktkennung der zusätzlichen PGW-U (104, 204) umfassen;
wobei die zusätzliche PGW-U (104, 204) eine Uplink-Klassifiziererfunktion implementiert, um zu ermöglichen, dass ein spezifizierter Teil von Uplink-Daten in der PDN-Verbindung an das zweite Datennetz (116, 216) über die zusätzliche PGW-U (104, 204) weitergeleitet wird, wobei der spezifizierte Teil von Uplink-Daten Kommunikationsdienstdaten mit geringer Latenz umfasst; und
Senden (412), an die zusätzliche PGW-U (104, 204), von Adressinformationen der initialen PGW-U (110, 210) und Anweisungsinformationen, die angeben, dass der spezifizierte Teil von Uplink-Daten in der PDN-Verbindung an das zweite Datennetz (116, 216) weitergeleitet wird und der andere Teil von Uplink-Daten in der PDN-Verbindung an die initiale PGW-U (110, 210) weitergeleitet wird, wobei die Adressinformationen der initialen PGW-U eine IP-Adresse und eine Tunnelendpunktkennung der initialen PGW-U umfassen und die Anweisungsinformationen, die an die zusätzliche PGW-U gesendet werden, Servicedatenflussfilter und/oder Anwendungsidentitätsinformationen, die mit dem spezifizierten Teil von Uplink-Daten verknüpft sind, umfassen,
Senden (414), an die initiale PGW-U (110, 210), von Adressinformationen der zusätzlichen PGW-U (104, 204) und Anweisungsinformationen, die angeben, dass die initiale PGW-U (110, 210) Kommunikation von der SGW-U (108, 208) auf die zusätzliche PGW-U (104, 204) umschaltet,
Einleiten (312, 416) einer Sitzungslöschvorgehensweise in Richtung einer alten zusätzlichen PGW-U, falls eine alte zusätzliche PGW-U vorhanden ist.

2. Verfahren nach Anspruch 1, wobei das Bestimmen, dass eine zusätzliche PGW-U (104, 204) für eine PDN-Verbindung zugewiesen werden muss, ferner umfasst:
Bestimmen, dass eine zusätzliche PGW-U (104, 204) für eine PDN-Verbindung zugewiesen werden muss, basierend auf mindestens einer von einer Erkennung eines Kommunikationsdiensts mit geringer Latenz in der PDN-Verbindung und einer Anforderung von einer Netzfunktion.

3. Verfahren, das durch ein System, umfassend ein zusätzliches Paketdatennetz-Gateway, PDN-Gateway, PGW, Benutzerebenenfunktion, PGW-U, (104, 204), eine initiale PGW-U (110, 210), eine Serving-Gateway, SGW,-Steuerungsebenenfunktion, SGW-C, (106, 206) und eine SGW-Benutzerebenenfunktion, SGW-U, (108, 208), implementiert wird, wobei eine PDN-Verbindung durch eine Benutzereinrichtung, UE, (112, 212) verwendet wird, um sich über mindestens die SGW-U (108, 208) des Drahtlosnetzes und die initiale PGW-U (110, 210) mit einem ersten Datennetz (114, 214) zu verbinden, und die zusätzliche PGW-U (104, 204) zum Verbinden mit einem zweiten Datennetz (116, 216) verwendet wird, wobei die zusätzliche PGW-U (104, 204) zu der PDN-Verbindung hinzugefügt wird, und wobei das erste Datennetz (114, 214) und das zweite Datennetz (116, 216) unterschiedliche Datennetze sind, wobei die zusätzliche PGW-U (104, 204) eine Uplink-Klassifiziererfunktion implementiert, um zu ermöglichen, dass ein spezifizierter Teil von Uplink-Daten in der PDN-Verbindung an das zweite Datennetz (116, 216) über die zusätzliche PGW-U (104, 204) weitergeleitet wird, wobei der spezifizierte Teil von Uplink-Daten Kommunikationsdienstdaten mit geringer Latenz umfasst;
wobei die zusätzliche PGW-U (104, 204):
von einer Steuerungsebene eines Paketdatennetz-Gateways, PDN-Gateways, PGW, PGW-C (102, 202), Adressinformationen der initialen PGW-U (110, 210) und Anweisungsinformationen empfängt (502), die angeben, dass ein spezifizierter Teil von Uplink-Daten in der PDN-Verbindung an das zweite Datennetz (116, 216) weitergeleitet wird und der andere Teil von Uplink-Daten in der PDN-Verbindung an die initiale PGW-U (110, 210) weitergeleitet wird, wobei die Adressinformationen der initialen PGW-U (110, 210) eine IP-Adresse und eine Tunnelendpunktkennung der initialen PGW-U (110, 210) umfassen und die Anweisungsinformationen Servicedatenflussfilter und/oder Anwendungsidentitätsinformationen, die mit dem spezifizierten Teil von Uplink-Daten verknüpft sind, umfassen; Empfangen (502), von der PGW-C (102, 202), einer initialen UE-IP-Adresse für die PDN-Verbindung und einer zusätzlichen UE-IP-Adresse, die durch die PGW-U (102, 202) zugewiesen wird;
eine Netzadressübersetzung, NAT, zwischen der initialen UE-IP-Adresse und der zusätzlichen UE-IP-Adresse durchführt (506), wenn Daten zwischen der UE (112, 212) und dem zweiten Datennetz (116, 216) über die zusätzliche PGW-U (104, 204) ausgetauscht werden;
die Uplink-Daten von der SGW-U (108, 208) empfängt (508); und
die Uplink-Daten basierend auf den Anweisungsinformationen weiterleitet (510);
und wobei die SGW-C (106, 206):
Adressinformationen der zusätzlichen PGW-U (104, 204) und Anweisungsinformationen von der PGW-C (102, 202) empfängt (602),
wobei die Anweisungsinformationen angeben, dass alle Uplink-Daten in der PDN-Verbindung an die zusätzliche PGW-U (104, 204) weitergeleitet werden, und wobei die Adressinformationen der zusätzlichen PGW-U (104, 204) eine IP-Adresse und eine Tunnelendpunktkennung der zusätzlichen PGW-U (104, 204) umfassen; und
die Adressinformationen der zusätzlichen PGW-U (104, 204) und Anweisungsinformationen an die SGW-U (108, 208) sendet (604), und wobei die SGW-U (108, 208):
von der SGW-C (106, 206) Adressinformationen der zusätzlichen PGW-U (104, 204) und Anweisungsinformationen empfängt (702), wobei die Anweisungsinformationen angeben, dass alle Uplink-Daten in der PDN-Verbindung an die zusätzliche PGW-U (104, 204) weitergeleitet werden, und wobei die Adressinformationen der zusätzlichen PGW-U (104, 204) eine IP-Adresse und eine Tunnelendpunktkennung der zusätzlichen PGW-U (104, 204) umfassen; und die Uplink-Daten in der PDN-Verbindung gemäß den Anweisungsinformationen verarbeitet (704), und wobei die initiale PGW-U (110, 210):
von der PGW-C (102, 202) Adressinformationen der zusätzlichen PGW-C (104, 204) und Anweisungsinformationen empfängt (802), die angeben, dass die initiale PGW-U (110, 210) Kommunikation von der SGW-U (108, 208) auf die zusätzliche PGW-U (104, 204) umschaltet, wobei die Adressinformationen der zusätzlichen PGW-U (104, 204) eine IP-Adresse und eine Tunnelendpunktkennung der zusätzlichen Benutzerebene des PGW (104, 204) umfassen; und Kommunikation von der SGW-U (108, 208) auf die zusätzliche PGW-U (104, 204) umschaltet (804).

4. Vorrichtung (910) für eine Steuerungsebene eines Paketdatennetz-Gateways, PDN-Gateways, PGW, PGW-C (102, 202) in einem Drahtlosnetz, umfassend:
einen Prozessor (911); und
einen Speicher (912), der mit dem Prozessor gekoppelt ist, wobei der Speicher Anweisungen, die durch den Prozessor (911) ausführbar sind, enthält, wobei die Vorrichtung (910) betriebsfähig ist zum:
Bestimmen, basierend auf einer Positionsänderung einer Benutzereinrichtung, UE, (112, 212) mit laufendem Kommunikationsdienst mit geringer Latenz, dass eine zusätzliche PGW-U (104, 204) für eine PDN-Verbindung zugewiesen werden muss, wobei die PDN-Verbindung durch eine Benutzereinrichtung, UE, (112, 212) verwendet wird, um sich mit einem ersten Datennetz (114, 214) über mindestens eine Benutzerebene eines Serving Gateway, SGW-U, (108, 208) des Drahtlosnetzes und eine initiale PGW-U (110, 210) zu verbinden, und die zusätzliche PGW-U (104, 204) zum Verbinden mit einem zweiten Datennetz (116, 216) verwendet wird, wobei die zusätzliche PGW-U (104, 204) zu der PDN-Verbindung hinzugefügt wird, und wobei das erste Datennetz (114, 214) und das zweite Datennetz (116, 216) unterschiedliche Datennetze sind;
Auswählen der zusätzlichen PGW-U (104, 204), wobei das Auswählen der zusätzlichen PGW-U (104, 204) das Auswählen der zusätzlichen PGW-U (104, 204), die nahe an der Position der UE (112, 212) ist, umfasst;
Zuweisen einer zusätzlichen UE-Internetprotokoll-Adresse, IP-Adresse, die durch die zusätzliche PGW-U (104, 204) verwendet wird, falls eine initiale UE-IP-Adresse für die PDN-Verbindung nicht unterstützt wird und/oder durch die die zusätzliche PGW-U (104, 204) nicht direkt verwendet werden kann; und
Senden der initialen UE-IP-Adresse und der zusätzlichen UE-IP-Adresse an die zusätzliche PGW-U (104, 204), um der zusätzlichen PGW-U (104, 204) zu ermöglichen, eine Netzadressübersetzung, NAT, zwischen der initialen UE-IP-Adresse und der zusätzlichen UE-IP-Adresse durchzuführen, wenn Daten zwischen der UE und dem zweiten Datennetz (116, 216) über die zusätzliche PGW-U (104, 204) ausgetauscht werden; und
Senden von Adressinformationen der zusätzlichen PGW-U (104, 204) und Anweisungsinformationen an eine SGW-C (106, 206), wobei die Anweisungsinformationen angeben, dass alle Uplink-Daten in der PDN-Verbindung an die zusätzliche PGW-U (104, 204) weitergeleitet werden, wobei der SGW-C (106, 206) ermöglicht wird, die SGW-U (108, 208) anzuweisen, die Uplink-Daten in der PDN-Verbindung basierend auf den Anweisungsinformationen weiterzuleiten, und wobei die Adressinformationen der zusätzlichen PGW-U (104, 204) eine IP-Adresse und eine Tunnelendpunktkennung der zusätzlichen PGW-U (104, 204) umfassen;
wobei die zusätzliche PGW-U (104, 204) eine Uplink-Klassifiziererfunktion implementiert, um zu ermöglichen, dass ein spezifizierter Teil von Uplink-Daten in der PDN-Verbindung an das zweite Datennetz (116, 216) über die zusätzliche PGW-U (104, 204) weitergeleitet wird;
Senden, an die zusätzliche PGW-U (104, 204), von Adressinformationen der initialen PGW-U (110, 210) und Anweisungsinformationen, die angeben, dass der spezifizierte Teil von Uplink-Daten in der PDN-Verbindung an das zweite Datennetz (116, 216) weitergeleitet wird und der andere Teil von Uplink-Daten in der PDN-Verbindung an die initiale PGW-U (110, 210) weitergeleitet wird, wobei die Adressinformationen der initialen PGW-U eine IP-Adresse und eine Tunnelendpunktkennung der initialen PGW-U umfassen und die Anweisungsinformationen, die an die zusätzliche PGW-U gesendet werden, Servicedatenflussfilter und/oder Anwendungsidentitätsinformationen, die mit dem spezifizierten Teil von Uplink-Daten verknüpft sind, umfassen,
Senden, an die initiale PGW-U (110, 210), von Adressinformationen der zusätzlichen PGW-U (104, 204) und Anweisungsinformationen, die angeben, dass die initiale PGW-U (110, 210) Kommunikation von der SGW-U (108, 208) auf die zusätzliche PGW-U (104, 204) umschaltet.

## Revendications

1. Procédé (300) implémenté au niveau d'un plan de commande d'une passerelle de réseau de données par paquets, PDN, PGW, PGW-C, (102, 202) dans un réseau sans fil, comprenant :
la détermination (302), en fonction d'un changement de localisation d'un équipement utilisateur, UE, (112, 212) avec un service de communication à faible latence en cours, qu'un plan utilisateur supplémentaire de la PGW, PGW-U (104, 204) pour une connexion PDN doit être alloué, dans lequel la connexion PDN est utilisée par un équipement utilisateur, UE, (112, 212) pour se connecter à un premier réseau de données (114, 214) par le biais d'au moins un plan utilisateur d'une passerelle de desserte, SGW, SGW-U, (108, 208) du réseau sans fil et un PGW-U initial (110, 210), et le PGW-U supplémentaire (104, 204) est utilisé pour une connexion à un second réseau de données (116, 216), dans lequel le PGW-U supplémentaire (104, 204) est ajouté à la connexion PDN, et dans lequel le premier réseau de données (114, 214) et le second réseau de données (116, 216) sont des réseaux de données différents ;
la sélection (304) du PGW-U supplémentaire (104, 204), dans lequel la sélection du PGW-U supplémentaire (104, 204) comprend la sélection du PGW-U supplémentaire (104, 204) qui est près de la localisation de l'UE (112, 212) ;
l'allocation (306) d'une adresse de protocole Internet, IP, d'UE supplémentaire utilisée par le PGW-U supplémentaire (104, 204) si une adresse IP d'UE initiale pour la connexion PDN n'est pas prise en charge et/ou ne peut pas être directement utilisée par le PGW-U supplémentaire (104, 204) ; et
l'envoi (308) de l'adresse IP d'UE initiale et de l'adresse IP d'UE supplémentaire au PGW-U supplémentaire (104, 204) pour permettre au PGW-U supplémentaire (104, 204) de mettre en œuvre une traduction d'adresses réseau, NAT, entre l'adresse IP d'UE initiale et l'adresse IP d'UE supplémentaire lorsque des données sont échangées entre l'UE et le second réseau de données (116, 216) par le biais du PGW-U supplémentaire (104, 204) ;
l'envoi (310) d'informations d'adresse du PGW-U supplémentaire (104, 204) et d'informations d'instruction à un SGW-C (106, 206), dans lequel les informations d'instruction indiquent que toutes les données de liaison montante dans la connexion PDN sont acheminées au PGW-U supplémentaire (104, 204), permettant au SGW-C (106, 206) de donner pour instruction au SGW-U (108, 208) d'acheminer les données de liaison montante dans la connexion PDN en fonction des informations d'instruction, et dans lequel les informations d'adresse du PGW-U supplémentaire (104, 204) comprennent une adresse IP et un identificateur de point terminal de tunnel du PGW-U supplémentaire (104, 204) ;
dans lequel le PGW-U supplémentaire (104, 204) implémente une fonction de classificateur de liaison montante pour permettre à une partie spécifiée de données de liaison montante dans la connexion PDN d'être acheminée au second réseau de données (116, 216) par le biais du PGW-U supplémentaire (104, 204), dans lequel la partie spécifiée de données de liaison montante comprend des données de service de communication à faible latence ; et
l'envoi (412), au PGW-U supplémentaire (104, 204), d'informations d'adresse du PGW-U initial (110, 210) et d'informations d'instruction indiquant que la partie spécifiée de données de liaison montante dans la connexion PDN est acheminée au second réseau de données (116, 216) et que l'autre partie de données de liaison montante dans la connexion PDN est acheminée au PGW-U initial (110, 210), dans lequel les informations d'adresse du PGW-U initial comprennent une adresse IP et un identificateur de point terminal de tunnel du PGW-U initial, et les informations d'instruction envoyées au PGW-U supplémentaire comprennent un filtre de flux de données de service et/ou des informations d'identité d'application associées à la partie spécifiée de données de liaison montante,
l'envoi (414), au PGW-U initial (110, 210), d'informations d'adresse du PGW-U supplémentaire (104, 204) et d'informations d'instruction indiquant que le PGW-U initial (110, 210) commute la communication du SGW-U (108, 208) au PGW-U supplémentaire (104, 204),
l'initiation (312, 416) d'une procédure de suppression de session vis-à-vis d'un ancien PGW-U supplémentaire s'il y a un ancien PGW-U supplémentaire.

2. Procédé selon la revendication 1, dans lequel la détermination qu'un PGW-U supplémentaire (104, 204) pour une connexion PDN doit être alloué comprend en outre :
la détermination qu'un PGW-U supplémentaire (104, 204) pour une connexion PDN doit être alloué en fonction d'au moins l'une parmi une détection d'un service de communication à faible latence dans la connexion PDN et une demande émanant d'une fonction réseau.

3. Procédé implémenté par un système comprenant une fonction de plan utilisateur de passerelle de réseau de données par paquets, PDN, PGW, PGW-U, supplémentaire (104, 204), un PGW-U initial (110, 210), une fonction de plan de commande de passerelle de desserte, SGW, SGW-C, (106, 206) et une fonction de plan utilisateur de SGW, SGW-U, (108, 208), dans lequel une connexion PDN est utilisée par un équipement utilisateur, UE, (112, 212) pour se connecter à un premier réseau de données (114, 214) par le biais d'au moins le SGW-U (108, 208) du réseau sans fil et le PGW-U initial (110, 210), et le PGW-U supplémentaire (104, 204) est utilisé pour une connexion à un second réseau de données (116, 216), dans lequel le PGW-U supplémentaire (104, 204) est ajouté à la connexion PDN, et dans lequel le premier réseau de données (114, 214) et le second réseau de données (116, 216) sont des réseaux de données différents, dans lequel le PGW-U supplémentaire (104, 204) implémente une fonction de classificateur de liaison montante pour permettre à une partie spécifiée de données de liaison montante dans la connexion PDN d'être acheminée au second réseau de données (116, 216) par le biais du PGW-U supplémentaire (104, 204), dans lequel la partie spécifiée de données de liaison montante comprend des données de service de communication à faible latence ;
dans lequel le PGW-U supplémentaire (104, 204) :
reçoit (502) en provenance d'un plan de commande d'une passerelle de réseau de données par paquets, PDN, PGW, PGW-C (102, 202), des informations d'adresse du PGW-U initial (110, 210) et des informations d'instruction indiquant qu'une partie spécifiée de données de liaison montante dans la connexion PDN est acheminée au second réseau de données (116, 216) et que l'autre partie de données de liaison montante dans la connexion PDN est acheminée au PGW-U initial (110, 210), dans lequel les informations d'adresse du PGW-U initial (110, 210) comprennent une adresse IP et un identificateur de point terminal de tunnel du PGW-U initial (110, 210), et les informations d'instruction comprennent un filtre de flux de données de service et/ou des informations d'identité d'application associées à la partie spécifiée de données de liaison montante ; la réception (502), en provenance du PGW-C (102, 202), d'une adresse IP d'UE initiale pour la connexion PDN et d'une adresse IP d'UE supplémentaire allouée par le PGW-U (102, 202) ;
met en œuvre (506) une traduction d'adresses réseau, NAT, entre l'adresse IP d'UE initiale et l'adresse IP d'UE supplémentaire lorsque des données sont échangées entre l'UE (112, 212) et le second réseau de données (116, 216) par le biais du PGW-U supplémentaire (104, 204) ;
reçoit (508) les données de liaison montante en provenance du SGW-U (108, 208) ; et
achemine (510) les données de liaison montante en fonction des informations d'instruction ;
et dans lequel le SGW-C (106, 206) :
reçoit (602) des informations d'adresse du PGW-U supplémentaire (104, 204) et des informations d'instruction en provenance du PGW-C (102, 202), dans lequel les informations d'instruction indiquent que toutes les données de liaison montante dans la connexion PDN sont acheminées au PGW-U supplémentaire (104, 204), et dans lequel les informations d'adresse du PGW-U supplémentaire (104, 204) comprennent une adresse IP et un identificateur de point terminal de tunnel du PGW-U supplémentaire (104, 204) ; et
envoie (604) les informations d'adresse du PGW-U supplémentaire (104, 204) et des informations d'instruction au SGW-U (108, 208), et dans lequel le SGW-U (108, 208) :
reçoit (702), en provenance du SGW-C (106, 206), des informations d'adresse du PGW-U supplémentaire (104, 204) et des informations d'instruction, dans lequel les informations d'instruction indiquent que toutes les données de liaison montante dans la connexion PDN sont acheminées au PGW-U supplémentaire (104, 204), et dans lequel les informations d'adresse du PGW-U supplémentaire (104, 204) comprennent une adresse IP et un identificateur de point terminal de tunnel du PGW-U supplémentaire (104, 204) ; et
raite (704) les données de liaison montante dans la connexion PDN selon les informations d'instruction, et dans lequel le PGW-U initial (110, 210) :
reçoit (802) en provenance du PGW-C (102, 202), des informations d'adresse du PGW-C supplémentaire (104, 204) et des informations d'instruction indiquant que le PGW-U initial (110, 210) commute la communication du SGW-U (108, 208) au PGW-U supplémentaire (104, 204), dans lequel les informations d'adresse du PGW-U supplémentaire (104, 204) comprennent une adresse IP et un identificateur de point terminal de tunnel du plan utilisateur supplémentaire du PGW (104, 204) ; et
commute (804) la communication du SGW-U (108, 208) au PGW-U supplémentaire (104, 204).

4. Appareil (910) destiné à un plan de commande d'une passerelle de réseau de données par paquets, PDN, PGW, PGW-C (102, 202) dans un réseau sans fil, comprenant :
un processeur (911) ; et
une mémoire (912) couplée au processeur, ladite mémoire contenant des instructions exécutables par ledit processeur (911), moyennant quoi ledit appareil (910) est fonctionnel pour :
déterminer, en fonction d'un changement de localisation d'un équipement utilisateur, UE, (112, 212) avec un service de communication à faible latence en cours, qu'un PGW-U supplémentaire (104, 204) pour une connexion PDN doit être alloué, dans lequel la connexion PDN est utilisée par un équipement utilisateur, UE, (112, 212) pour se connecter à un premier réseau de données (114, 214) par le biais d'au moins un plan utilisateur d'une passerelle de desserte, SGW-U, (108, 208) du réseau sans fil et d'un PGW-U initial (110, 210), et le PGW-U supplémentaire (104, 204) est utilisé pour une connexion à un second réseau de données (116, 216), dans lequel le PGW-U supplémentaire (104, 204) est ajouté à la connexion PDN, et dans lequel le premier réseau de données (114, 214) et le second réseau de données (116, 216) sont des réseaux de données différents ;
sélectionner le PGW-U supplémentaire (104, 204), dans lequel le fait de sélectionner le PGW-U supplémentaire (104, 204) comprend le fait de sélectionner le PGW-U supplémentaire (104, 204) qui est près de la localisation de l'UE (112, 212) ;
allouer une adresse de protocole Internet, IP, d'UE supplémentaire utilisée par le PGW-U supplémentaire (104, 204) si une adresse IP d'UE initiale pour la connexion PDN n'est pas prise en charge et/ou ne peut pas être directement utilisée par le PGW-U supplémentaire (104, 204) ; et
envoyer l'adresse IP d'UE initiale et l'adresse IP d'UE supplémentaire au PGW-U supplémentaire (104, 204) pour permettre au PGW-U supplémentaire (104, 204) de mettre en œuvre une traduction d'adresses réseau, NAT, entre l'adresse IP d'UE initiale et l'adresse IP d'UE supplémentaire lorsque des données sont échangées entre l'UE et le second réseau de données (116, 216) par le biais du PGW-U supplémentaire (104, 204) ; et
envoyer des informations d'adresse du PGW-U supplémentaire (104, 204) et des informations d'instruction à un SGW-C (106, 206), dans lequel les informations d'instruction indiquent que toutes les données de liaison montante dans la connexion PDN sont acheminées au PGW-U supplémentaire (104, 204), permettant au SGW-C (106, 206) de donner pour instruction au SGW-U (108, 208) d'acheminer les données de liaison montante dans la connexion PDN en fonction des informations d'instruction, et dans lequel les informations d'adresse du PGW-U supplémentaire (104, 204) comprennent une adresse IP et un identificateur de point terminal de tunnel du PGW-U supplémentaire (104, 204) ;
dans lequel le PGW-U supplémentaire (104, 204) implémente une fonction de classificateur de liaison montante pour permettre à une partie spécifiée de données de liaison montante dans la connexion PDN d'être acheminée au second réseau de données (116, 216) par le biais du PGW-U supplémentaire (104, 204) ;
envoyer, au PGW-U supplémentaire (104, 204), des informations d'adresse du PGW-U initial (110, 210) et des informations d'instruction indiquant que la partie spécifiée de données de liaison montante dans la connexion PDN est acheminée au second réseau de données (116, 216) et que l'autre partie de données de liaison montante dans la connexion PDN est acheminée au PGW-U initial (110, 210), dans lequel les informations d'adresse du PGW-U initial comprennent une adresse IP et un identificateur de point terminal de tunnel du PGW-U initial, et les informations d'instruction envoyées au PGW-U supplémentaire comprennent un filtre de flux de données de service et/ou des informations d'identité d'application associées à la partie spécifiée de données de liaison montante,
envoyer, au PGW-U initial (110, 210), des informations d'adresse du PGW-U supplémentaire (104, 204) et des informations d'instruction indiquant que le PGW-U initial (110, 210) commute la communication du SGW-U (108, 208) au PGW-U supplémentaire (104, 204).
